# EUROPEAN PATENT APPLICATION

(11) **EP 4 592 960 A1**
(43) Date of publication of application: **30.07.2025**
(21) Application number: 23896429.0
(22) Date of filing: 01.11.2023
(51) Int. Cl.: G06T 15/00, G06F 1/3234

(54) **RENDERING METHOD AND APPARATUS, AND ELECTRONIC DEVICE**

(30) Priority: 02.12.2022 CN 202211540314
(71) Applicant: Huawei Technologies Co., Ltd., Shenzhen, Guangdong 518129 (CN)
(72) Inventor: CHEN, Qiulin, Shenzhen, Guangdong 518129 (CN); YANG, Chengyun, Shenzhen, Guangdong 518129 (CN); ZHENG, Tianji, Shenzhen, Guangdong 518129 (CN); WANG, Yiyuan, Shenzhen, Guangdong 518129 (CN)
(74) Representative: Maiwald GmbH
(86) International application number: PCT/CN2023/128945
(87) International publication number: WO 2024/114275

(57) **Abstract**

Embodiments of this application provide a rendering method and apparatus, and an electronic device. The method includes: obtaining updated data, where the updated data is data corresponding to a node whose data is updated in a node in a control tree and a node in a render tree; and encoding and compressing the updated data, to obtain first scene data, where the first scene data includes data indicating a type and index information of a primitive, and the first scene data is used for rendering. In the method, a data-driven rendering pipeline is used to draw the primitive, to reduce overall power consumption and load.

## Description

This application claims priority to Chinese Patent Application No. 202211540314.1, filed with the China National Intellectual Property Administration on December 2, 2022 and entitled "RENDERING METHOD AND APPARATUS, AND ELECTRONIC DEVICE", which is incorporated herein by reference in its entirety.

### TECHNICAL FIELD

Embodiments of this application relate to the rendering field, and more specifically, to a rendering method and apparatus, and an electronic device.

### BACKGROUND

With rapid development of mobile terminals and the Internet, people increasingly depend on the mobile terminal. In this case, people have higher expectations for endurance of the mobile terminal. Currently, main methods for improving the endurance include: increasing a battery capacity, reducing screen brightness, limiting a frequency of a processor, and the like. However, all these methods have obvious disadvantages (for example, increasing a weight of the mobile terminal, affecting viewing experience of a user, and stalling), thereby affecting use experience of the user.

Therefore, a method needs to be urgently provided, so that the use experience of the user cannot be affected while the endurance is improved.

### SUMMARY

This application provides a rendering method and apparatus, and an electronic device. In the method, a drawing instruction is intercepted, an instruction stream is integrated into drawing data, a data-driven rendering pipeline is used to draw a primitive, and some overheads in a CPU are further migrated to a GPU, to reduce load of the CPU and fully use a parallel feature of the GPU. Therefore, overall power consumption and load can be reduced, and endurance is improved without affecting user experience. In addition, the method can be compatible with an existing application ecosystem, so that an existing application can be optimized.

According to a first aspect, a rendering method is provided. The method includes: obtaining updated data of a primitive, where the updated data is data corresponding to a node whose data is updated in a node in a control tree and a node in a render tree; and encoding the updated data, to obtain first scene data, where the first scene data includes data indicating a type of the primitive and data indicating index information of the primitive, and the first scene data is used for rendering.

Optionally, the method is applied to any one or more of a central processing unit CPU, a graphics processing unit GPU, and a neural-network processing unit (neural-network processing unit, NPU) of the rendering apparatus.

Optionally, when the method is applied to the graphics processing unit GPU of the rendering apparatus, the first scene data is GPU scene data; and when the method is applied to the neural-network processing unit NPU of the rendering apparatus, the first scene data is NPU scene data.

Optionally, the first scene data includes encoded updated data and encoded data that is not updated. The updated data is the data corresponding to the node whose data is updated in the node in the control tree and the node in the render tree, and the data that is not updated is data corresponding to a node whose data is not updated in the node in the control tree and the node in the render tree.

Optionally, the updated data includes one or more of the data indicating the type of the primitive, data indicating a transformation matrix index of the primitive, data indicating a style information index of the primitive, and data indicating a texture index of the primitive. In addition, the updated data may further include data indicating other index information of the primitive. This is not limited in this application.

Optionally, the first scene data further includes one or more of data indicating a transformation matrix of the primitive, data indicating style information of the primitive, and data indicating a texture of the primitive.

Optionally, the index information of the primitive includes one or more of the transformation matrix index of the primitive, the style information index indicating the primitive, and the texture index indicating the primitive. In addition, the index information of the primitive may further include the other index information (for example, cache index information) of the primitive. This is not limited in this application.

The primitive is different drawing shapes such as a circle, a rectangle, a line, an image, and a curve. Each primitive has an expression manner of the primitive. For example, a circle can be described by using a center of a circle and a radius.

Optionally, the method further includes: performing rendering based on the first scene data.

In this embodiment of this application, a data-driven rendering pipeline is used to draw the primitive, and merely data updating is performed in all procedures, so that an original instruction-based triangle rendering pipeline can be broken through, and load of a CPU can be reduced. In addition, buffers for encoding all resources and primitives are independent of each other, and are connected to each other based on indexes, so that spatial locality of data can be improved, and incremental updating of data resources can be supported, to reduce memory transmission overheads.

With reference to the first aspect, in a possible implementation, the obtaining updated data includes: obtaining second data of the primitive, where the second data is data related to a drawing instruction of the primitive; performing node data updating on the control tree and the render tree based on the second data; and obtaining the updated data based on an updated control tree and an updated render tree.

Optionally, the second data includes one or more of the data indicating the type of the primitive, data indicating a location of the primitive, and data indicating a style of the primitive. In addition, the second data may further include data indicating other information of the primitive. This is not limited in this application.

With reference to the first aspect, in a possible implementation, the obtaining second data of the primitive includes: intercepting the drawing instruction of the primitive; obtaining first data of the primitive based on the drawing instruction of the primitive; and obtaining the second data of the primitive based on the first data of the primitive, where the second data is data obtained after the first data is converted into an identifiable format.

Optionally, the first data includes one or more of the data indicating the type of the primitive, the data indicating the location of the primitive, and the data indicating the style of the primitive. In addition, the first data may further include the data indicating the other information of the primitive. This is not limited in this application.

Optionally, the drawing instruction is intercepted by a hook layer.

In this embodiment of this application, the data-driven rendering pipeline is used to draw the primitive, and merely data updating is performed in all procedures, so that the original instruction-based triangle rendering pipeline can be broken through, and load of the CPU can be reduced. In addition, the hook layer is used to intercept an instruction stream, so that an upper layer and a lower layer are imperceptible. The method can be compatible with the existing application ecosystem, so that the existing application can be optimized.

With reference to the first aspect, in a possible implementation, the encoding the updated data includes: encoding the updated data based on a sequence relationship between the updated data.

The sequence relationship between the updated data may correspond to a coverage overlapping relationship between the node in the control tree and the node in the render tree. For example, a control 1 covers a control 2, the control 2 is located under the control 1, and only the control 1 can be directly seen on a screen. In this case, a sequence relationship between data corresponding to the control 1 and data corresponding to the control 2 is that the data corresponding to the control 1 is before the data corresponding to the control 2.

In this embodiment of this application, the updated data has the sequence relationship, so that the updated data can be subsequently encoded (serialized) based on the sequence relationship. In this way, when the data is decoded for use subsequently, the data can be decoded more accurately and efficiently.

With reference to the first aspect, in a possible implementation, the method further includes: updating the first scene data to a graphics processing unit GPU or a neural-network processing unit NPU. The first scene data is used by the GPU or the NPU for shading.

In this embodiment of this application, some overheads in the CPU are migrated to the GPU or the NPU, to reduce the load of the CPU and fully use a parallel feature of the GPU, thereby reducing overall power consumption and load.

According to a second aspect, a rendering method is provided. The method includes: obtaining first scene data, where the first scene data includes data indicating a type of a primitive and data indicating index information of the primitive; decoding the first scene data, to obtain third data, where the third data includes updated data of the primitive, and the updated data is data corresponding to a node whose data is updated in a node in a control tree and a node in a render tree; and determining a shading policy based on the third data, and performing shading based on the shading policy.

Optionally, the method may be applied to one or more of a central processing unit CPU, a graphics processing unit GPU, and a neural-network processing unit NPU.

Optionally, when the method is applied to the graphics processing unit GPU, the first scene data is GPU scene data; and when the method is applied to the neural-network processing unit NPU, the first scene data is NPU scene data.

Optionally, the index information of the primitive includes one or more of the transformation matrix index of the primitive, the style information index indicating the primitive, and the texture index indicating the primitive. In addition, the index information of the primitive may further include the other index information (for example, cache index information) of the primitive. This is not limited in this application.

Optionally, the first scene data further includes one or more of data indicating a transformation matrix of the primitive, data indicating style information of the primitive, and data indicating a texture of the primitive. In addition, the first scene data may further include data indicating other information of the primitive (for example, data indicating cache information of the primitive). This is not limited in this application.

Optionally, the third data further includes data that is not updated, and the data that is not updated is data corresponding to a node whose data is not updated in the node in the control tree and the node in the render tree.

Optionally, the third data includes the data indicating the type of the primitive and the data indicating the index information of the primitive.

In this embodiment of this application, buffers for encoding all resources and primitives are independent of each other, and are connected to each other based on indexes, so that spatial locality of data can be improved, and incremental updating of data resources can be supported, to reduce memory transmission overheads. In addition, in the method, the primitive may be drawn in a dual data-driven manner on a CPU side and a GPU side, and load on the CPU side is migrated to the GPU, to fully use a parallel feature of the GPU. Therefore, overall power consumption and load are reduced.

With reference to the second aspect, in a possible implementation, the first scene data includes data indicating that animation information of the primitive needs to be calculated, and before the decoding the first scene data, to obtain third data, the method further includes: calculating the animation information of the primitive based on the first scene data; and encoding the animation information of the primitive into the first scene data.

Optionally, the calculating the animation information of the primitive based on the first scene data may be: decoding or partially decoding the first scene data; calculating and updating animation information of a current primitive by using a data-driven animation shader (animation shader, AS); and after calculation is completed, re-encoding data obtained through animation calculation into the first scene data.

In this embodiment of this application, the data-driven animation shader AS can be used to perform animation calculation, data input to the AS is scene native semantic data, and output data may be directly decoded in a first scene data decoding phase without a need to perform steps such as instruction recording. In this way, more information can be obtained, and a drawing process can be cleaner and more efficient.

With reference to the second aspect, in a possible implementation, the determining a shading policy based on the third data includes: determining the shading policy based on the type of the primitive and/or the style information of the primitive.

With reference to the second aspect, in a possible implementation, the performing shading based on the shading policy includes: performing shading based on the shading policy, the style information of the primitive, or the texture of the primitive.

With reference to the second aspect, in a possible implementation, the method further includes: obtaining one or more of the type of the primitive, the style information of the primitive, and the texture of the primitive based on the index information of the primitive.

According to a third aspect, a rendering apparatus is provided. The apparatus includes: a data updating module, configured to obtain updated data of a primitive, where the updated data is data corresponding to a node whose data is updated in a node in a control tree and a node in a render tree; and a definition module, configured to encode the updated data, to obtain first scene data, where the first scene data includes data indicating a primitive type of the primitive and data indicating index information of the primitive, and the first scene data is used for rendering.

Optionally, the apparatus may be any one or more of a central processing unit CPU, a graphics processing unit GPU, and a neural-network processing unit (neural-network processing unit, NPU).

Optionally, when the apparatus is a graphics processing unit GPU, the first scene data is GPU scene data; and when the apparatus is a neural-network processing unit NPU, the first scene data is NPU scene data.

Optionally, the first scene data includes encoded updated data and encoded data that is not updated. The updated data is the data corresponding to the node whose data is updated in the node in the control tree and the node in the render tree, and the data that is not updated is data corresponding to a node whose data is not updated in the node in the control tree and the node in the render tree.

Optionally, the updated data includes one or more of the data indicating the type of the primitive, data indicating a transformation matrix index of the primitive, data indicating a style information index of the primitive, and data indicating a texture index of the primitive. In addition, the updated data may further include data indicating other index information of the primitive. This is not limited in this application.

Optionally, the first scene data further includes one or more of data indicating a transformation matrix of the primitive, data indicating style information of the primitive, and data indicating a texture of the primitive.

Optionally, the index information of the primitive includes one or more of the transformation matrix index of the primitive, the style information index indicating the primitive, and the texture index indicating the primitive. In addition, the index information of the primitive may further include the other index information (for example, cache index information) of the primitive. This is not limited in this application.

Optionally, the apparatus performs rendering based on the first scene data.

In this embodiment of this application, a data-driven rendering pipeline is used to draw the primitive, and merely data updating is performed in all procedures, so that an original instruction-based triangle rendering pipeline can be broken through, and load of a CPU can be reduced. In addition, buffers for encoding all resources and primitives are independent of each other, and are connected to each other based on indexes, so that spatial locality of data can be improved, and incremental updating of data resources can be supported, to reduce memory transmission overheads.

With reference to the third aspect, in a possible implementation, the apparatus further includes: a data integration module, configured to obtain second data of the primitive. The second data is data related to a drawing instruction of the primitive. The data updating module is specifically configured to: perform node data updating on the control tree and the render tree based on the second data; and obtain the updated data based on an updated control tree and an updated render tree.

Optionally, the second data includes one or more of the data indicating the type of the primitive, data indicating a location of the primitive, and data indicating a style of the primitive. In addition, the second data may further include data indicating other information of the primitive. This is not limited in this application.

With reference to the third aspect, in a possible implementation, the apparatus further includes: an instruction interception module, configured to intercept the drawing instruction of the primitive. The data integration module is specifically configured to: obtain first data of the primitive based on the drawing instruction of the primitive; and obtain the second data of the primitive based on the first data of the primitive, where the second data is data obtained after the first data is converted into an identifiable format.

Optionally, the first data includes one or more of the data indicating the type of the primitive, the data indicating the location of the primitive, and the data indicating the style of the primitive. In addition, the first data may further include the data indicating the other information of the primitive. This is not limited in this application.

Optionally, the drawing instruction is intercepted by a hook layer.

In this embodiment of this application, the data-driven rendering pipeline is used to draw the primitive, and merely data updating is performed in all procedures, so that the original instruction-based triangle rendering pipeline can be broken through, and load of the CPU can be reduced. In addition, the hook layer is used to intercept an instruction stream, so that an upper layer and a lower layer are imperceptible. The method can be compatible with the existing application ecosystem, so that the existing application can be optimized.

With reference to the third aspect, in a possible implementation, the definition module is specifically configured to encode the updated data based on a sequence relationship between the updated data.

The sequence relationship between the updated data may correspond to a coverage overlapping relationship between the node in the control tree and the node in the render tree. For example, a control 1 covers a control 2, the control 2 is located under the control 1, and only the control 1 can be directly seen on a screen. In this case, a sequence relationship between data corresponding to the control 1 and data corresponding to the control 2 is that the data corresponding to the control 1 is before the data corresponding to the control 2.

In this embodiment of this application, the updated data has the sequence relationship, so that the updated data can be subsequently encoded (serialized) based on the sequence relationship. In this way, when the data is decoded for use subsequently, the data can be decoded more accurately and efficiently.

With reference to the third aspect, in a possible implementation, the apparatus further includes: a resource updating module, configured to update the first scene data to a graphics processing unit GPU or a neural-network processing unit NPU. The first scene data is used by the GPU or the NPU for shading.

In this embodiment of this application, some overheads in the CPU can be migrated to the GPU or the NPU, to reduce the load of the CPU and fully use a parallel feature of the GPU, thereby reducing overall power consumption and load.

According to a fourth aspect, a rendering apparatus is provided. The apparatus includes: an obtaining module, configured to obtain first scene data, where the first scene data includes data indicating a type of a primitive and data indicating index information of the primitive; a decoding module, configured to decode the first scene data, to obtain third data, where the third data includes updated data of the primitive, and the updated data is data corresponding to a node whose data is updated in a node in a control tree and a node in a render tree; and a rendering module, configured to: determine a shading policy based on the third data, and perform shading based on the shading policy.

Optionally, the apparatus may be one or more of a central processing unit CPU, a graphics processing unit GPU, and a neural-network processing unit NPU.

Optionally, when the apparatus is a graphics processing unit GPU, the first scene data is GPU scene data; and when the apparatus is a neural-network processing unit NPU, the first scene data is NPU scene data.

Optionally, the index information of the primitive includes one or more of the transformation matrix index of the primitive, the style information index indicating the primitive, and the texture index indicating the primitive. In addition, the index information of the primitive may further include the other index information (for example, cache index information) of the primitive. This is not limited in this application.

Optionally, the first scene data further includes one or more of data indicating a transformation matrix of the primitive, data indicating style information of the primitive, and data indicating a texture of the primitive. In addition, the first scene data may further include data indicating other information of the primitive (for example, data indicating cache information of the primitive). This is not limited in this application.

Optionally, the third data further includes data that is not updated, and the data that is not updated is data corresponding to a node whose data is not updated in the node in the control tree and the node in the render tree.

Optionally, the third data includes the data indicating the type of the primitive and the data indicating the index information of the primitive.

In this embodiment of this application, buffers for encoding all resources and primitives are independent of each other, and are connected to each other based on indexes, so that spatial locality of data can be improved, and incremental updating of data resources can be supported, to reduce memory transmission overheads. In addition, in the method, the primitive may be drawn in a dual data-driven manner on a CPU side and a GPU side, and load on the CPU side is migrated to the GPU, to fully use a parallel feature of the GPU. Therefore, overall power consumption and load are reduced.

With reference to the fourth aspect, in a possible implementation, the first scene data includes data indicating that animation information of the primitive needs to be calculated, and the apparatus further includes: an animation calculation module, configured to calculate the animation information of the primitive based on the first scene data. The animation calculation module is further configured to encode the animation information of the primitive into the first scene data.

Optionally, the calculating the animation information of the primitive based on the first scene data may be: decoding or partially decoding the first scene data; calculating and updating animation information of a current primitive by using a data-driven animation shader (animation shader, AS); and after calculation is completed, re-encoding data obtained through animation calculation into the first scene data.

In this embodiment of this application, the data-driven animation shader AS can be used to perform animation calculation, data input to the AS is scene native semantic data, and output data may be directly decoded in a first scene data decoding phase without a need to perform steps such as instruction recording. In this way, more information can be obtained, and a drawing process can be cleaner and more efficient.

With reference to the fourth aspect, in a possible implementation, the rendering module is specifically configured to determine the shading policy based on the type of the primitive and/or the style information of the primitive.

With reference to the fourth aspect, in a possible implementation, the rendering module is further specifically configured to perform shading based on the shading policy, the style information of the primitive, or the texture of the primitive.

With reference to the fourth aspect, in a possible implementation, the rendering module is further specifically configured to obtain one or more of the type of the primitive, the style information of the primitive, and the texture of the primitive based on the index information of the primitive.

According to a fifth aspect, an electronic device is provided. The electronic device includes a memory and a processor, the memory is configured to store computer program code, and the processor is configured to execute the computer program code stored in the memory, to implement the method in any one of the first aspect or the possible implementations of the first aspect, and/or implement the method in any one of the second aspect or the possible implementations of the second aspect.

According to a sixth aspect, an electronic device is provided. The electronic device includes the apparatus in any one of the third aspect or the possible implementations of the third aspect, and/or includes the apparatus in any one of the fourth aspect or the possible implementations of the fourth aspect.

According to a seventh aspect, a chip is provided. The chip stores instructions, and when the instructions are run on a device, the chip is enabled to perform the method in any one of the first aspect or the possible implementations of the first aspect, and/or perform the method in any one of the second aspect or the possible implementations of the second aspect.

According to an eighth aspect, a computer-readable storage medium is provided. The computer-readable storage medium stores a computer program or instructions. When the computer program or the instructions are executed, the method in any one of the first aspect or the possible implementations of the first aspect is implemented, and/or the method in any one of the second aspect or the possible implementations of the second aspect is implemented.

According to a ninth aspect, a computer program product is provided. The computer program product includes computer program code. When the computer program code is run, the method in any one of the first aspect or the possible implementations of the first aspect is implemented, and/or the method in any one of the second aspect or the possible implementations of the second aspect is implemented.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3 is a schematic flowchart of an instruction-driven drawing method;
FIG. 4 is a schematic flowchart of another drawing method;
FIG. 5 is a diagram of a method for encoding various primitives by using a primitive buffer;
FIG. 6 is a diagram of a comparison between an instruction-driven drawing procedure and a data-driven drawing procedure according to an embodiment of this application;
FIG. 7 is a diagram of functional modules of a rendering apparatus according to an embodiment of this application;
FIG. 8 is a diagram of a system architecture according to an embodiment of this application;
FIG. 9 is a schematic flowchart of a rendering method according to an embodiment of this application;
FIG. 10 is a schematic flowchart of another rendering method according to an embodiment of this application;
FIG. 11 is a schematic flowchart of a method for intercepting first data according to an embodiment of this application;
FIG. 12 is a schematic flowchart of a data integration method according to an embodiment of this application;
FIG. 13 is a schematic flowchart of a method for defining GPU scene data according to an embodiment of this application;
FIG. 14 is a diagram of a primitive encoding method according to an embodiment of this application;
FIG. 15 is a schematic flowchart of a resource updating (updating GPU scene data to a GPU side) method according to an embodiment of this application;
FIG. 16 is a diagram of a resource updating procedure according to an embodiment of this application;
FIG. 17 is an instruction flowchart in a primitive drawing process according to an embodiment of this application;
FIG. 18 is a schematic flowchart of an animation calculation method according to an embodiment of this application;
FIG. 19 is a schematic flowchart of performing animation calculation by using an animation shader according to an embodiment of this application;
FIG. 20 is a schematic flowchart of a method for decoding GPU scene data according to an embodiment of this application;
FIG. 21 is a diagram of a decoding procedure of a vertex shader according to an embodiment of this application;
FIG. 22 is a schematic flowchart of a method for performing shading based on a shading policy according to an embodiment of this application; and
FIG. 23 is a schematic flowchart of a drawing method of a fragment/pixel shader according to an embodiment of this application.

### DESCRIPTION OF EMBODIMENTS

The following describes technical solutions of this application with reference to accompanying drawings. It is clear that the described embodiments are merely some but not all of embodiments of this application.

The following describes the technical solutions in embodiments of this application with reference to the accompanying drawings in embodiments of this application. In descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the description of embodiments of this application, "a plurality of" means two or more than two.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of embodiments, unless otherwise specified, "a plurality of" means two or more.

Terms used in the following embodiments are merely intended to describe specific embodiments, but are not intended to limit this application. As used in the specification and appended claims of this application, singular expressions "one", "a", "the", "the foregoing", "this", and "the one" are also intended to include expressions such as "one or more", unless the contrary is clearly indicated in the context. It should be further understood that in the following embodiments of this application, "at least one" and "one or more" refer to one, two, or more. The term "and/or" is used to describe an association relationship of associated objects and represents that three relationships may exist. For example, A and/or B may represent the following three cases: Only A exists, both A and B exist, and only B exists, where A and B may be singular or plural. The character "/" usually indicates an "or" relationship between the associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in another embodiment", and "in some other embodiments" that appear at different places in this specification do not necessarily mean referring to a same embodiment. Instead, the statements mean "one or more but not all of embodiments", unless otherwise specifically emphasized in another manner. Terms "include", "comprise", "have", and variations thereof all mean "including but not limited to", unless otherwise specified.

The method provided in embodiments of this application may be applied to an electronic device such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

The following describes terms used in embodiments of this application.

### 1. Graphics processing unit (graphics processing unit, GPU)

The GPU is a type of dedicated hardware dedicated to processing graphics in a computer. An advantage of the GPU is that the GPU may process a plurality of similar tasks in parallel. For example, when an image is rendered, a plurality of pixels are rendered simultaneously, and the GPU can accelerate such a process. One GPU can process thousands of tasks concurrently.

### 2. Central processing unit (central processing unit, CPU)

The CPU is a brain of all chips. All tasks are processed by the CPU. A task of the CPU is mainly to interpret a computer instruction and process data in computer software. A disadvantage of the CPU is that tasks can only be executed in serial successively. Even nowadays (2022) in which a multi-core parallel processor is popular, only several to dozens of tasks can be executed concurrently.

### 3. Rendered frame

The rendered frame is an image rendered by a graphics processing unit GPU. A plurality of rendered frames are continuously played to achieve a dynamic effect.

### 4. Frame rate

In real-time rendering, a quantity of rendered frames produced each second is referred to as the frame rate. A unit is frame per second (frame per second, FPS). For example, "frame rate 60" indicates that 60 rendered frames are produced in one second currently. A higher frame rate indicates a smoother display effect.

### 5. Power consumption

Power consumption is used to measure efficiency of consuming resources (power) in a calculation process. A unit of power consumption is milliampere (mA). When a battery level of a device is specified, higher power consumption of running a mobile phone leads to higher power consumption in a unit time and a shorter use time.

### 6. Chip frequency

The chip frequency is a quantity of cycles in which a chip runs. A higher chip frequency indicates a larger quantity of instructions executed in a unit time and also higher power consumption of the chip.

### 7. Frequency limit and frame limit

The frequency limit and the frame limit are a mandatory manner of limiting a chip running frequency (chip frequency) and a game running frame rate to prevent an electronic device such as a mobile phone from overheating in a game process.

### 8. Endurance

The endurance is a time in which an electronic device such as a mobile terminal is continuously used after being fully charged. A longer time (namely, longer endurance) indicates better user experience.

### 9. Texture

The texture is another name of an "image" during drawing, and may also be referred to as a texture.

### 10. Energy efficiency ratio

The energy efficiency ratio is a ratio of computing power to energy (or power consumption), namely, computing power provided by unit energy. A higher energy efficiency ratio indicates stronger computing power provided by the unit energy and a more advanced chip. To reduce power consumption, more chips with high energy efficiency ratios are usually used, and fewer chips with low energy efficiency ratios are used.

### 11. Primitive

The primitive is different drawing shapes such as a circle, a rectangle, a line, an image, and a curve. Each primitive has an expression manner of the primitive. For example, a circle can be described by using a center of a circle and a radius.

### 12. Triangularization

An architecture of a current GPU better supports drawing of only a triangle. Therefore, a way is found to convert all primitives into triangles on a CPU side. Such a process is referred to as triangularization of a primitive.

### 13. Spatial locality

When a CPU loads data, an entire block of data is loaded into a cache, and then the data is frequently read or written in the cache. In this way, a computing speed of the CPU is accelerated. Spatial locality is good in a case of such continuous storage of frequently and continuously accessed data. If the frequently and continuously accessed data is placed separately, a plurality of blocks of data need to be loaded into the cache at a plurality of times. In this case, space locality is poor, and running efficiency is greatly affected.

### 14. Animation shader (animation shader, AS)

The animation shader is a technology in which user interface (user interface, UI) animation calculated at a CPU end is migrated to a GPU.

### 15. Vertex shader (vertex shader, VS)

The vertex shader processes instructions for transforming vertex coordinates of a triangle. After the vertex shader, the triangle is converted to a screen coordinate system.

### 16. Fragment/Pixel shader (fragment shader, FS)

A fragment/pixel shader is an instruction for controlling how to shade a screen pixel. After the fragment shader, a color of each coordinate point on a screen is determined.

### 17. Graphics processing unit (graphics processing unit scene, GPU scene)

The graphics processing unit scene is a set of scene data formats defined in this application. The graphics processing unit scene includes all data required for drawing. Scene data is defined on a CPU side, and the scene data is parsed on a GPU side. A function of the GPU scene is somewhat similar to a function of a primitive buffer of Machinery, but formats are completely different.

### 18. Index

The index is used to point to an address of another memory, and is similar to a directory entry in a dictionary. The address of the another memory may be directly found based on the index, and data in the found another memory is read.

### 19. Data flow

The data flow is a string of continuous binary data. Valid information cannot be obtained by directly observing the data flow. The valid information can be obtained only after the data flow is decoded. It is similar to transmitting water (valid data) in all cups in a form of a water flow (data flow), and the water in the water flow needs to be classified (analyzed) in use.

### 20. Drawcall

Drawcall is also referred to as Drawops or DrawPrimitive, is a drawing instruction delivered by a CPU to a GPU, and is used to tell the GPU what to draw and how to draw. Usually, one drawcall is used to draw only one primitive. For example, a first drawcall is used to draw a circle, and a second drawcall is used to draw a triangle.

### 21. Control tree

An application is drawn by combining all controls. Each control is a geometry of some primitives. MeeTime is used as an example. On a chat page of MeeTime, each chat box is a control. There is a hierarchical relationship between the controls. For example, the chat box has subcontrols such as "chat name", "time", and "icon", and the chat box is a subcontrol on the entire chat page. An entirety including the hierarchical relationship is referred to as a "control tree". Each application has a control tree.

### 22. Render tree

During rendering, there are a series of rendered objects. These rendered objects basically one-to-one correspond to control trees. In this way, a render tree is formed. The control tree is not directly used as a render tree, because updating, creation, and deletion of each node in the render tree are time-consuming, and updating, creation, and deletion of a node in the control tree are lightweight. Therefore, in most cases in which a page changes, only the control tree is updated, a redundant part in the control tree is searched for, and the render tree is updated.

### 23. Shader

In 2D graphics, regardless of how to change an angle of view, a building, a flower, grass, and a tree on the ground do not change. This is different in 3D graphics in which a seen object changes as the angle of view changes. When the angle of view changes from the front to a side, a farther object is smaller, and a closer object is larger. This is very similar to a situation seen by a human eye in real life. The shader is a technology specially used to render the 3D graphics. With the shader, a programmer may compile an algorithm in which a graphics card renders an image, so that the image becomes more beautiful and vivid. The shader does not exist a few years ago. Therefore, a graphics card at that time does not support the shader, but only supports fixed pipeline rendering, and a game image is not as cool as a current game image. There are two types of shaders. One is a vertex shader (the 3D graphics include a triangle, and the vertex shader calculates a vertex location and prepares for subsequent pixel rendering), and the other is a pixel shader. The pixel shader is a series of algorithms for calculating illumination and a color by pixel. Different graphics APIs have respective shader languages. In DirectX, the vertex shader is referred to as a vertex shader, and the pixel shader is referred to as a pixel shader. In OpenGL, the vertex shader is also referred to as a vertex shader, but the pixel shader is referred to as a fragment shader.

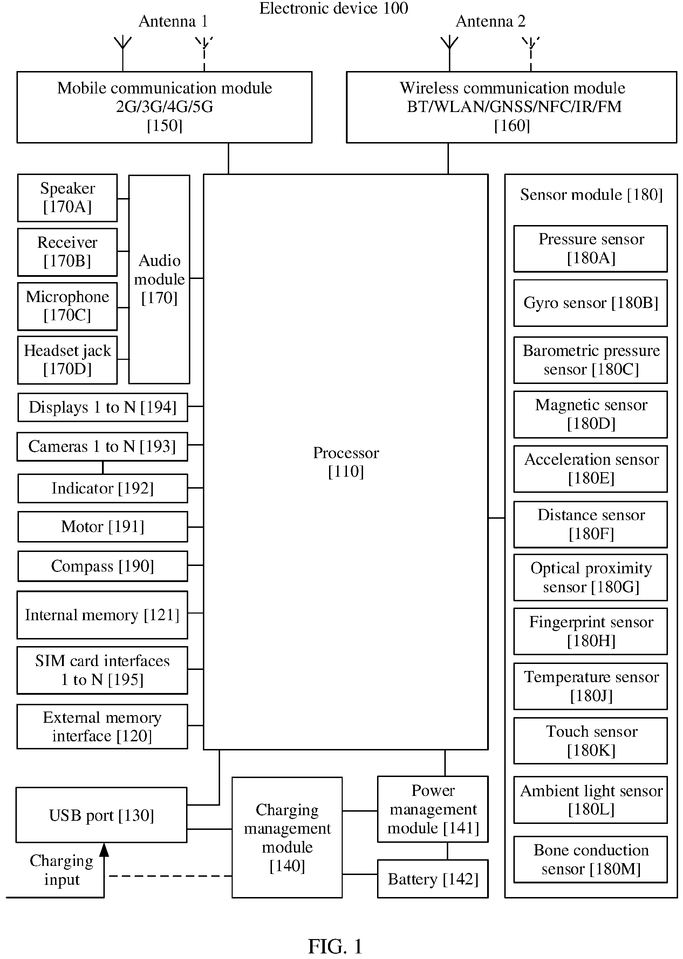

For example, FIG. 1 is a diagram of a structure of an electronic device 100. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the electronic device 100. In some other embodiments of this application, the electronic device 100 may include more or fewer components than those shown in the figure, some components may be combined, or some components may be divided, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that is just used or repeatedly used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through the PCM bus interface. In some embodiments, the audio module 170 may alternatively transfer an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The UART interface converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music through the Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB port 130 is an interface that conforms to a USB standard specification, and may be specifically a mini USB port, a micro USB port, a USB Type C port, or the like. The USB port 130 may be configured to be connected to the charger to charge the electronic device 100, or may be configured to transmit data between the electronic device 100 and a peripheral device, or may be configured to be connected to a headset, to play audio by using the headset. The interface may be further configured to be connected to another electronic device, for example, an AR device.

It can be understood that an interface connection relationship between modules illustrated in this embodiment of this application is merely an illustrative description, and does not constitute a limitation on the structure of the electronic device 100. In some other embodiments of this application, different interface connection manners in the foregoing embodiments or a combination of a plurality of interface connection manners may alternatively be used for the electronic device 100.

The charging management module 140 is configured to receive a charging input from the charger. The charger may be a wireless charger or a wired charger. In some embodiments of wired charging, the charging management module 140 may receive a charging input from a wired charger through the USB port 130. In some embodiments of wireless charging, the charging management module 140 may receive a wireless charging input through a wireless charging coil of the electronic device 100. The charging management module 140 may further supply power to the electronic device by using the power management module 141 while charging the battery 142.

The power management module 141 is configured to be connected to the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like. The power management module 141 may be further configured to monitor a parameter such as a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that is applied to the electronic device 100 and that includes 2G/3G/4G/5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, or the like), and displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, and execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a transfer mode between human brain neurons; and may further continuously perform self-learning. The NPU may be used to implement applications such as intelligent cognition of the electronic device 100, for example, image recognition, facial recognition, voice recognition, and text understanding.

The external memory interface 120 may be configured to be connected to an external storage card, for example, a micro SD card, to extend a storage capability of the electronic device 100. The external storage card communicates with the processor 110 through the external memory interface 120, to implement a data storage function. For example, a file such as music or a video is stored in the external storage card.

The internal memory 121 may be configured to store computer-executable program code. The executable program code includes instructions. The processor 110 runs the instructions stored in the internal memory 121, to execute various function applications and data processing of the electronic device 100. The internal memory 121 may include a program storage area and a data storage area. The program storage area may store an operating system, an app required by at least one function (for example, a sound playing function or an image playing function), and the like. The data storage area may store data (for example, audio data or an address book) and the like created when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "horn", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function, and the like.

The headset jack 170D is configured to be connected to a wired headset. The headset jack 170D may be the USB port 130, or may be a 3.5 mm open mobile terminal platform (open mobile terminal platform, OMTP) standard interface, or a cellular telecommunication industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 180B may be configured to determine a moving posture of the electronic device 100. In some embodiments, an angular velocity of the electronic device 100 around three axes (that is, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations of the electronic device 100 in various directions (usually on three axes). When the electronic device 100 is still, a magnitude and a direction of gravity may be detected. The acceleration sensor 180E may be further configured to recognize a posture of the electronic device, and is applied to applications such as switching between a landscape mode and a portrait mode and a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown due to a low temperature.

The touch sensor 180K is also referred to as a touch panel. The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided on the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing or audio playing) may correspond to different vibration feedback effects. The motor 191 may also correspond to different vibration feedback effects for touch operations performed on different regions of the display 194. Different application scenarios (for example, a time reminder, receiving information, an alarm clock, and a game) may also correspond to different vibration feedback effects. A touch vibration feedback effect may alternatively be customized.

The indicator 192 may be an indicator light, and may be configured to indicate a charging status and a power change, or may be configured to indicate a message, a missed call, a notification, and the like.

The SIM card interface 195 is configured to be connected to an SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may also be compatible with an external storage card. The electronic device 100 interacts with a network by using the SIM card, to implement functions such as conversation and data communication. In some embodiments, the electronic device 100 uses an embedded-SIM (embedded-SIM, eSIM) card, namely, an embedded-SIM card. The eSIM card may be embedded into the electronic device 100, and cannot be separated from the electronic device 100.

It should be understood that a calling card in embodiments of this application includes but is not limited to a SIM card, an eSIM card, a universal subscriber identity module (universal subscriber identity module, USIM) card, a universal integrated circuit card (universal integrated circuit card, UICC), and the like.

A software system of the electronic device 100 may use a layered architecture, an event-driven architecture, a microkernel architecture, a micro service architecture, or a cloud architecture. In this embodiment of this application, an Android system with a layered architecture is used as an example to describe a software structure of the electronic device 100.

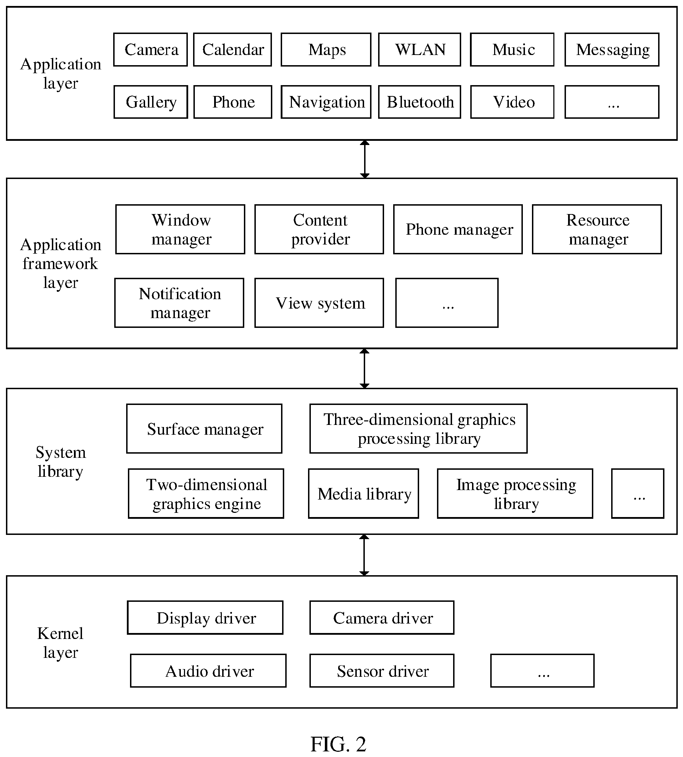

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and a system library, and a kernel layer. The application layer may include a series of application packages.

As shown in FIG. 2, the application packages may include applications such as Camera, Gallery, Calendar, Phone, Maps, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources for the application, for example, a localized string, an icon, an image, a layout file, and a video file.

The notification manager enables an application to display notification information in a status bar, and may be configured to convey a notification message. The notification manager may automatically disappear after a short pause without requiring a user interaction. For example, the notification manager is configured to: notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, an electronic device vibrates, or an indicator blinks.

The Android runtime includes a kernel library and a virtual machine. The Android runtime is responsible for scheduling and managing an Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to perform functions such as object lifecycle management, stack management, thread management, security and abnormality management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

The technical solutions in this embodiment of this application may be applied to a scenario in which endurance of the electronic device is improved.

The electronic device in this embodiment of this application may be a notebook computer, or may be a portable electronic device such as a mobile phone, a tablet computer, a camera, a video camera, or a video recorder, or may be another electronic device having endurance, an electronic device in a 5G network, an electronic device in a future evolved public land mobile communication network (public land mobile network, PLMN), or the like. This is not limited in this application.

Rapid development of mobile terminals and the mobile Internet brings great convenience to people's production and life. Various types of mobile applications emerge explosively, bringing convenience to people's daily life. People can use a mobile terminal of a mobile phone to communicate, shop, and browse a video anytime and anywhere. In addition, dependence of a user on the mobile terminal also leads to an increasingly high requirement on endurance of the mobile terminal. Therefore, a manufacturer of a mobile terminal device starts to make efforts in the endurance, and wants to improve the endurance of the mobile terminal device through various means.

There are many manners of improving the endurance of the mobile terminal device, mainly including manners such as increasing a battery capacity, reducing screen brightness, and limiting a frequency of a CPU and a frequency of a GPU. However, if the battery capacity is increased, a weight and a size of the mobile terminal are increased, and consequently, the user has poor hand-holding experience; if the screen brightness is reduced, viewing experience of the user is affected; and if the frequency of the CPU and the frequency of the GPU are limited, an application becomes stalling and has a slow response.

Therefore, a method needs to be urgently provided, so that the use experience of the user cannot be affected while the endurance is improved.

Optimization of an operating system can also improve the endurance, and the optimization usually does not affect user experience. The operating system is very large software, and includes hundreds of modules such as a drawing module, a network module, a sound module, and a kernel module. The drawing module is responsible for "drawing", on a screen, content that the user wants to display, and the drawing module of the operating system is an important factor that affects power consumption of the mobile terminal (the power consumption affects the endurance of the mobile terminal).

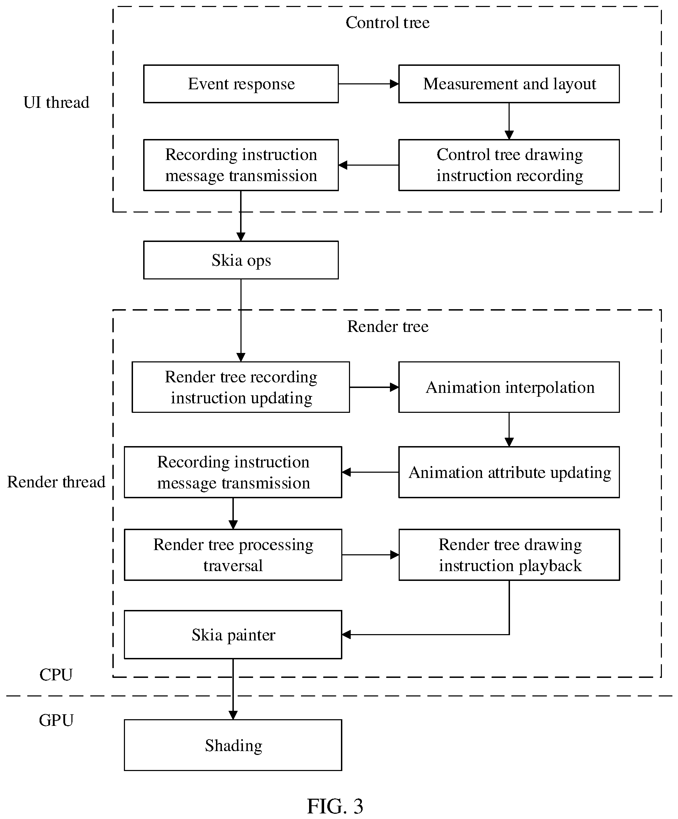

FIG. 3 is a schematic flowchart of an instruction-driven drawing method 300. As shown in FIG. 3, in the method 300, a process of drawing an interface includes a UI thread and a render thread. The UI thread includes steps: an event response, measurement and layout, control tree drawing instruction recording, and recording instruction message transmission. Then, a recording instruction message enters the render thread through Skia ops. The render thread includes steps: render tree recording instruction updating, animation interpolation, animation attribute updating, recording instruction message transmission, render tree processing traversal, render tree drawing instruction playback, and Skia painter. Finally, a shader process in a GPU is entered.

In the method 300, when the interface is drawn, a drawing instruction stream is delivered. For example, drawcircle, drawrectangle, and drawimage are delivered sequentially, and indicate that a circle, a rectangle, and an image are drawn sequentially. Necessary information for drawing a color, a location, or the like of a primitive is included in each drawing instruction. Each drawing instruction does a lot of things, for example, performs triangularization to convert a circle into a plurality of triangles, records an instruction, plays back the instruction, and updates animation. These processes are performed in a CPU.

In the method 300, the CPU executes a command in most time of drawing. However, because the CPU can only sequentially execute tasks in serial, stalling is easily caused. However, the GPU may process a plurality of similar tasks in parallel, and has a large-scale parallel processing feature. In the method 300, the feature of the GPU is not fully used, and consequently, power consumption generated during drawing may be high.

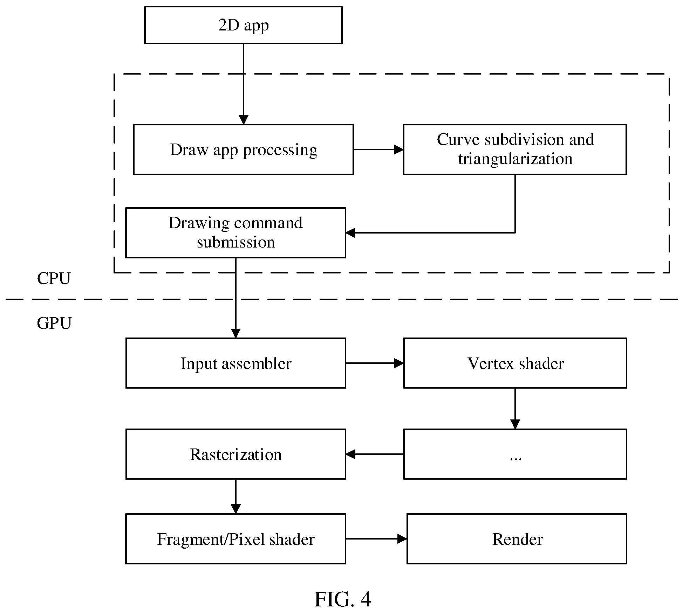

FIG. 4 is a schematic flowchart of a drawing method 400. The method 400 is applied to an MIT protocol based open-source vector graphics rendering library (Vger). In the method 400, all primitives are drawn in a rectangular form, and then different shading policies are selected for different primitives based on types of the primitives in a fragment/pixel shader.

As shown in FIG. 4, in the method 400, steps performed in a CPU include: draw app processing, curve subdivision and triangularization, and drawing command submission. Then, steps are performed in a GPU: input assembler (input assembler), vertex shader processing, rasterization processing, fragment/pixel shader processing, and rendering.

Specifically, in the method 400, a user may draw primitives of different shapes by invoking different draws. Then, all draws invoked by the user are sorted and uniformly converted into a rectangle. In the GPU, a process of performing coordinate transformation by using a vertex shader is also uniformly processed in a rectangle manner, and different shading is performed based on different types of primitives only in a process of shading a screen pixel by using the fragment/pixel shader in the GPU.

Primitive types supported in the method 400 include a second-order Bessel curve, a rounded rectangle, a circle, a line segment, and an arc.

In the method 400, only a final drawing result is concerned, neither control layout nor control data in a drawing process is concerned, and an animation part of a control is not concerned. In addition, in the method, spatial locality of data is poor, and incremental updating of resources is not supported. In addition, the method can be used only in an iOS operating system, and because a workload of application adaptation is large if the method is compatible with an existing application, the method is not easily compatible with an existing ecosystem.

The following describes another drawing method 500. The method 500 is applied to Machinery (a GPU-driven game engine). In the method 500, various primitives are encoded by using a primitive buffer in 3D rendering, and the primitives are decoded in a vertex shader, to reduce load of triangle subdivision at a CPU end.

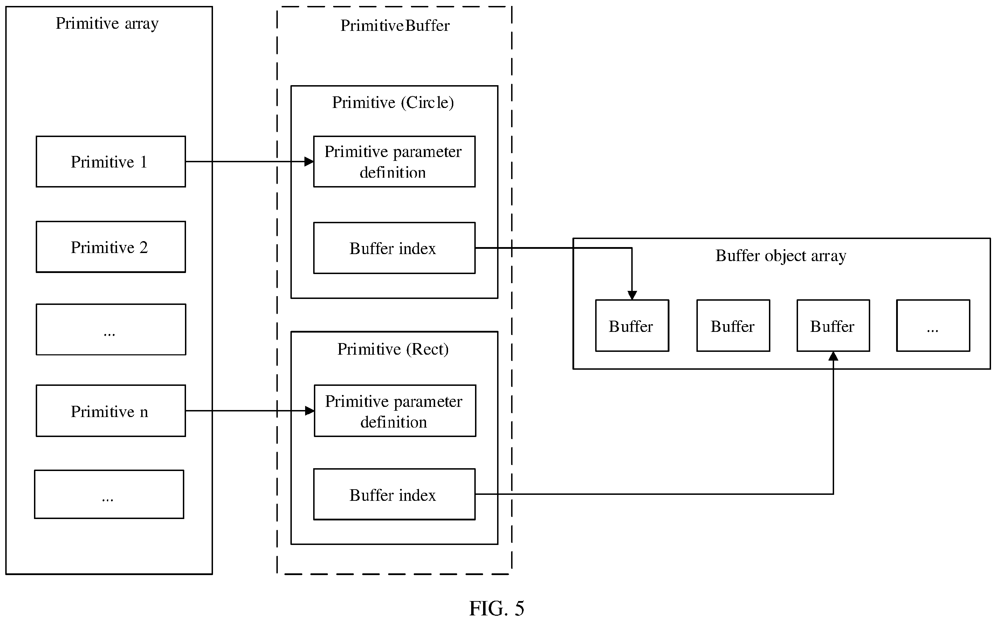

FIG. 5 shows a method for encoding various primitives by using a primitive buffer in the method 500. As shown in FIG. 5, in the method, buffers of all primitives are arranged together (which become a buffer object array), and a buffer of each type of primitive is a fixed-length array.

A main difference between the method 500 and the method 400 lies in that Machinery to which the method 500 is applied is a game engine and 2D rendering is only a part of functions of the game engine, while Vger to which the method 400 is applied is a pure 2D rendering library; the primitive buffer is used to encode the primitive in the method 500, while all primitives are processed as rectangles in the method 400; and different primitives are decoded in a vertex shader processing phase in the method 500, while different primitives are distinguished only in a fragment/pixel shader processing phase in the method 400.

For Machinery, 2D rendering is only a small feature of Machinery. In the method 500, neither control layout nor control data in a drawing process is concerned, and an animation part of a control is not concerned. In addition, in the method, a design of the primitive buffer is not perfect, and incremental updating of resources is not supported either, leading to frequent resource uploading. In addition, optimization of some existing applications cannot be supported in the method. In a current application ecosystem, a probability of performing optimization by using Machinery is almost zero, and a modification amount is huge.

The following further describes a GPU-based efficient 2D vector graphics rendering method 600. In the method 600, all primitives are preprocessed into a vector "path", information about the path is transferred to a GPU, triangle subdivision is performed by using a tessellation shader of the GPU, and finally, a final depicted region is drawn by using a stencil buffer.

The method 600 is similar to the method 400, and a main difference lies in that in the method 600, all primitives are uniformly decomposed into paths (all the primitives are processed as rectangles in the method 400); surface subdivision is performed through a tessellation (this step is not included in the method 400); and finally, a final region is drawn by using the stencil buffer (the final region is drawn without using the stencil buffer in the method 400).

In the method 600, neither control layout nor control data in a drawing process is concerned, an animation part of a control is not concerned, and only a final drawing result is concerned. In addition, in the method, spatial locality of data is poor, and incremental updating of resources cannot be supported either. In addition, the tessellation is used in the method. However, the tessellation has high power consumption in a mobile terminal, and has poor cost performance. In addition, the tessellation is not supported by many mobile terminal devices, and has poor universality. Therefore, it is difficult for the tessellation to become a solution supported across platform operating systems.

It can be learned from the foregoing content that only a last "2D rendering" phase is basically concerned in the method 400 to the method 600.

The following describes an open-source cross-platform 2D graphics engine, namely, Skia.

Skia is an open-source cross-platform 2D graphics engine developed by Google, and is used in an Android system. Because Android is used in various mobile terminals, Skia is also widely used in various industries. Skia has a plurality of modules such as a control tree, instruction recording, control layout, and a 2D rendering engine, and is a GUI framework with comprehensive functions from an event response to GPU drawing.

However, Skia is an instruction-based 2D graphics rendering engine. With reference to the method 300, an instruction-based engine performs a quite large quantity of operations at a CPU end, resulting in very high load on a CPU side during running, long time consumption, and a rendering duration ratio in a frame exceeding 70%. Consequently, utilization of a GPU (with a higher energy efficiency ratio) is not high, application power consumption is high, and stalling is more likely to occur.

The following describes an animation calculation method on a GPU side, namely, an animation shader. In the method, operations such as node animation interpolation and node attribute updating that originally need to be calculated on a CPU side are moved to a GPU. After the animation shader is used for calculation on the GPU side, data is transmitted to a CPU, to perform further calculation.

However, in an existing 2D application framework, only Skia uses the animation shader. However, when Skia uses animation, data transmitted to the GPU before calculation is private resource data processed by Skia, and a large amount of native semantic information of a user is lost, resulting in poor scalability. In addition, the step of "native data processing" is added in advance, resulting in low efficiency.

In view of the foregoing technical problems, embodiments of this application provide a rendering method and apparatus, and an electronic device. In the method, an original instruction-based triangle rendering pipeline is broken through, and a data-driven rendering pipeline is used to draw a primitive, to reduce load of a CPU and fully use a parallel feature of a GPU. Therefore, overall power consumption and load are reduced. In addition, the method can be compatible with an existing application ecosystem, so that an existing application can be optimized.

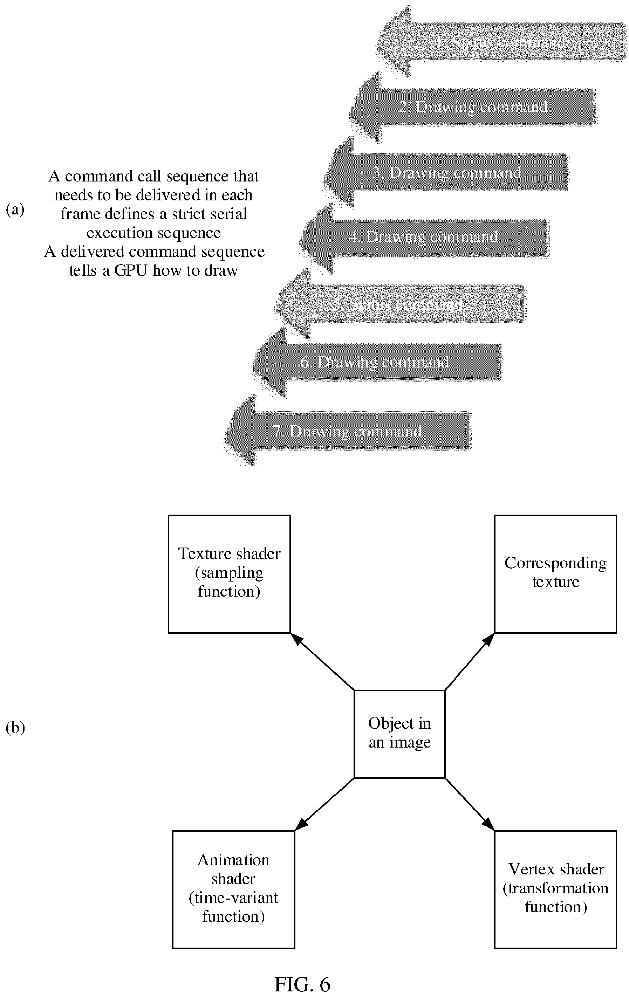

First, for example, with reference to FIG. 6, an instruction-driven drawing procedure and a data-driven drawing procedure are described.

(a) in FIG. 6 shows the instruction-driven drawing procedure. As shown in (a) in FIG. 6, in the instruction-driven drawing procedure, a CPU performs the procedure in serial, and a command call sequence that needs to be delivered in each frame defines a strict serial execution sequence. A GPU sequentially executes, in each frame, a draw call sequence delivered by the CPU. In other words, the CPU tells the GPU how to draw each primitive, and the GPU strictly performs drawing according to a drawing instruction.

(b) in FIG. 6 shows the data-driven drawing procedure. As shown in (b) in FIG. 6, in the data-driven drawing procedure, a GPU independently selects a parallel drawing manner based on data on a page. For multi-frame animation, the GPU independently calculates a coordinate movement. In other words, a CPU only needs to tell the GPU data that needs to be drawn, and the GPU determines how to draw the data.

It can be learned that, an instruction-driven method is mature and is suitable for an existing rasterization pipeline of GPU hardware, but serial overheads of the CPU are high. If primitive triangularization is performed at a CPU end, due to a large quantity of draw calls, stalling is caused, and a parallel feature of the GPU and a processing capability of the GPU are not fully used. In a data-driven method, the parallel feature of the GPU can be fully used, and interaction overheads can be reduced, so that overheads of the CPU are reduced, repeated drawing can be eliminated, and there are advantages of low power consumption and high performance.

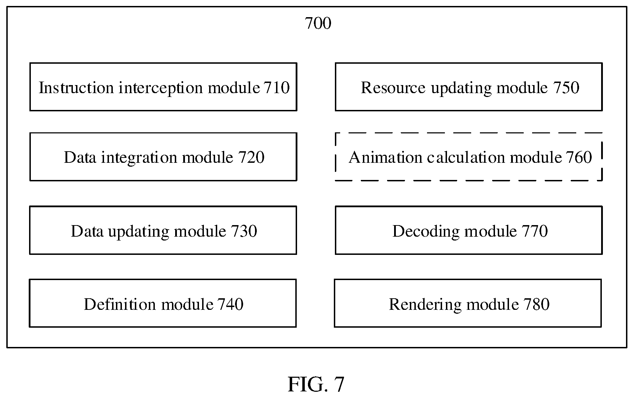

For example, FIG. 7 is a diagram of functional modules of a rendering apparatus 700 according to an embodiment of this application. The apparatus 700 may be applied to an electronic device (for example, a mobile terminal), and the rendering apparatus is located at an application framework layer. As shown in FIG. 7, the apparatus 700 includes the following modules.

An instruction interception module 710 is configured to intercept a drawing instruction.

The drawing instruction is a drawing instruction (or a drawing command) output in event response and measurement and layout steps.

Optionally, the apparatus 700 may further include an event response module and a measurement and layout module, respectively configured to complete an event response operation and a measurement and layout operation.

Optionally, the instruction interception module 710 may be a hook layer, and the instruction interception module 710 intercepts, in a hook manner, an instruction stream delivered by the measurement and layout module.

Details may be as follows: The instruction interception module 710 may cut off a native instruction recording path (namely, an original instruction stream delivery path), encapsulate all subsequent interfaces provided in this embodiment, and forward the instruction stream to a first interface provided in this embodiment. The instruction stream is delivered to the data integration module through the first interface.

A data integration module 720 is configured to: obtain first data from the drawing instruction, and convert the first data into second data.

The first data is data related to the drawing instruction. The first data includes one or more of data indicating a type of a primitive, data indicating a location of the primitive, and data indicating a style of the primitive. In addition, the first data may further include data indicating other information of the primitive. This is not limited in this application.

The second data is obtained by converting the first data into an identifiable format. In other words, format conversion is performed on the first data, to convert the first data into a format that can be identified in this embodiment. That is, the second data is obtained. Similarly, the second data is also the data related to the drawing instruction, and the second data also includes one or more of the data indicating the type of the primitive, the data indicating the location of the primitive, and the data indicating the style of the primitive. In addition, the second data may further include the data indicating the other information of the primitive. This is not limited in this application.

It can be understood that the instruction interception module 710 and the data integration module 720 are optional modules, and a data updating module 730 may alternatively obtain updated data in another manner. For example, the updated data may be sent by a third-party apparatus or module to the data updating module 730.

The data updating module 730 is configured to sequentially perform control tree node attribute updating and render tree node attribute updating based on the second data.

Optionally, the data updating module 730 may include a control tree node data updating module and a render tree node data updating module. The control tree node data updating module is configured to perform control tree node attribute updating based on the second data; and the render tree node data updating module is configured to perform render tree node attribute updating based on the second data.

The data updating module 730 is further configured to obtain the updated data based on an updated control tree and an updated render tree.

Optionally, an operation performed by the data updating module 730 may be performed before an operation performed by the instruction interception module 710. This is not limited in this application.

A definition module 740 is configured to encode the updated data, to obtain GPU scene data.

Optionally, the definition module 740 may also be referred to as a GPU scene data definition module, and the definition module 740 may also be referred to as an encoding module.

Optionally, the GPU scene data includes encoded updated data and encoded data that is not updated. The updated data is data corresponding to a node whose data is updated in a node in the control tree and a node in the render tree, and the data that is not updated is data corresponding to a node whose data is not updated in the node in the control tree and the node in the render tree.

Optionally, the updated data can be obtained based on the updated control tree and the updated render tree. The updated data may be understood as data indicating content that needs to be drawn in a current frame, and the content that needs to be drawn in the current frame corresponds to an updated part of the updated control tree and the updated render tree.

Optionally, the updated data has a first relationship. The first relationship is a sequence relationship between the data (namely, the updated data) indicating the content that needs to be drawn in the current frame. The updated data further includes data indicating a type of a primitive that needs to be drawn.

Optionally, the GPU scene data includes a primitive array, primitiveBuffer, a transform object array, a paint object array, and an image object array.

Optionally, the GPU scene data includes the data indicating the type of the primitive and the data indicating the index information of the primitive.

Optionally, the index information of the primitive includes one or more of a transformation matrix index of the primitive, a style information index of the primitive, and a texture index of the primitive, and may further include other index information (for example, cache index information) of the primitive. This is not limited in this application.

Optionally, the updated data may be serialized based on the first relationship.

The first relationship between the updated data may also be understood as a sequence relationship between the updated data. The sequence relationship between the updated data may correspond to a coverage overlapping relationship between the node in the control tree and the node in the render tree. For example, a control 1 covers a control 2, the control 2 is located under the control 1, and only the control 1 can be directly seen on a screen. In this case, a sequence relationship between data corresponding to the control 1 and data corresponding to the control 2 is that the data corresponding to the control 1 is before the data corresponding to the control 2.

A resource updating module 750 is configured to update the GPU scene data to a GPU side.

It can be understood that the instruction interception module 710, the data integration module 720, the data updating module 730, the definition module 740, and the resource updating module 750 are located in a CPU of the rendering apparatus 700.

An animation calculation module 760 is configured to calculate and update animation information of a current primitive when the current primitive has the animation information.

Optionally, the animation calculation module 760 determines, based on the GPU scene data, whether the current primitive has the animation information.

Optionally, if the current primitive has the animation information, the animation calculation module 760 calculates and updates the animation information of the current primitive by using an animation shader (animation shader, AS); and after calculation is completed, re-encodes data obtained through animation calculation into the GPU scene data.

It can be understood that the animation information that is of the current primitive and that is calculated by using the AS is a location at which the current primitive (in a current frame) is finally located. In this case, geometric information of the current primitive is basically determined.

It should be understood that if the current primitive does not have the animation information, the animation calculation module 760 does not perform an operation.

A decoding module 770 is configured to decode the GPU scene data or the GPU scene data obtained through animation calculation, to obtain third data.

The third data includes the updated data, and the updated data is the data corresponding to the node whose data is updated in the node in the control tree and the node in the render tree.

Optionally, the third data further includes data that is not updated, and the data that is not updated is the data corresponding to the node whose data is not updated in the node in the control tree and the node in the render tree.

Optionally, the third data includes one or more of data indicating a type of a currently drawn primitive, data indicating a transformation matrix index of the current primitive, data indicating a style information index of the current primitive, and data indicating a texture index of the current primitive.

A rendering module 780 is configured to: determine a shading policy based on the third data, and perform shading based on the shading policy.

Optionally, the GPU side may include an obtaining module, configured to obtain the GPU scene data.

In this embodiment of this application, a data-driven rendering pipeline is used to draw the primitive, and merely data updating is performed in all procedures, so that an original instruction-based triangle rendering pipeline can be broken through, and load of the CPU can be reduced. In addition, buffers for encoding all resources and primitives are independent of each other, and are connected to each other based on indexes, so that spatial locality of data can be improved, and incremental updating of data resources can be supported, to reduce memory transmission overheads. In addition, in the method, the primitive may be drawn in a dual data-driven manner on a CPU side and a GPU side, and load on the CPU side is migrated to a GPU, to fully use a parallel feature of the GPU. Therefore, overall power consumption and load are reduced. In addition, in the method, the hook layer is used to intercept the instruction stream, so that the method can be compatible with an existing application ecosystem, and the existing application can be optimized.

The rendering apparatus and the rendering method provided in embodiments of this application may be applied to a 2D application of the mobile terminal.

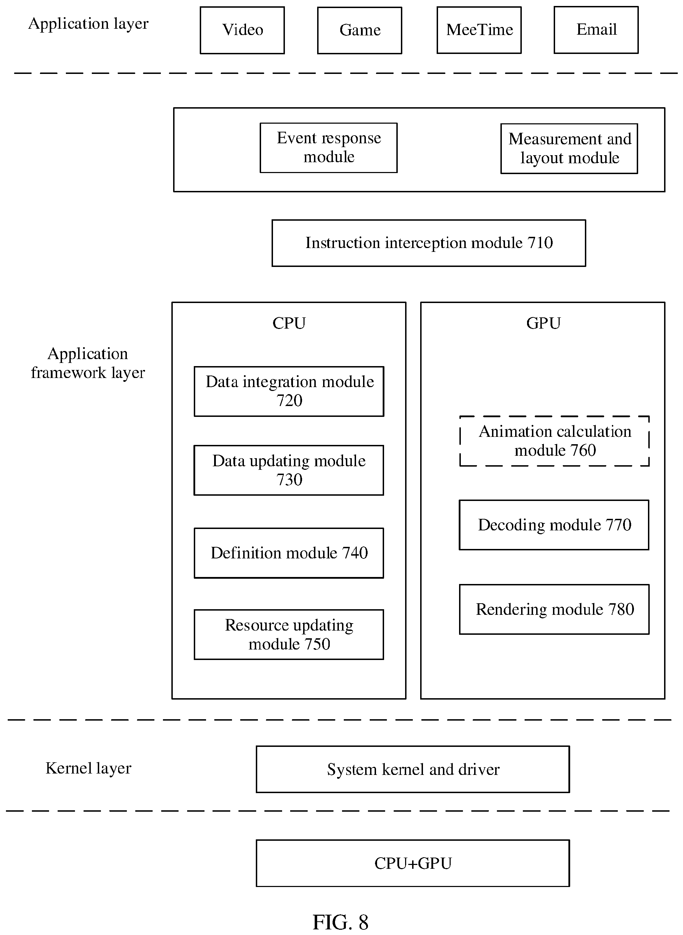

For example, FIG. 8 is a diagram of a system architecture 800 to which this embodiment of this application is applicable.

As shown in FIG. 8, the rendering apparatus 700 provided in this embodiment of this application is distributed at an application framework layer in an operating system. The data integration module 720, the data updating module 730, the definition module 740, and the resource updating module 750 are located in the central processing unit CPU. The animation calculation module 760, the decoding module 770, and the rendering module 780 are located in the graphics processing unit GPU.

It can be further learned from FIG. 8 that the application framework layer further includes the event response module, the measurement and layout module, and the instruction interception module 710. In addition, the operating system architecture 800 further includes an application layer. For example, the application layer may include a video application, a game application, a MeeTime application, and an email application. The operating system architecture 800 further includes a kernel layer, and the kernel layer includes a system kernel and a driver. The operating system architecture 800 further includes a chip, for example, the CPU and/or the GPU.

Optionally, the operating system architecture 800 may further include a graphics application programming interface (Application Programming Interface, API) layer. For example, the graphics API layer may be OpenGL or Vulkan.

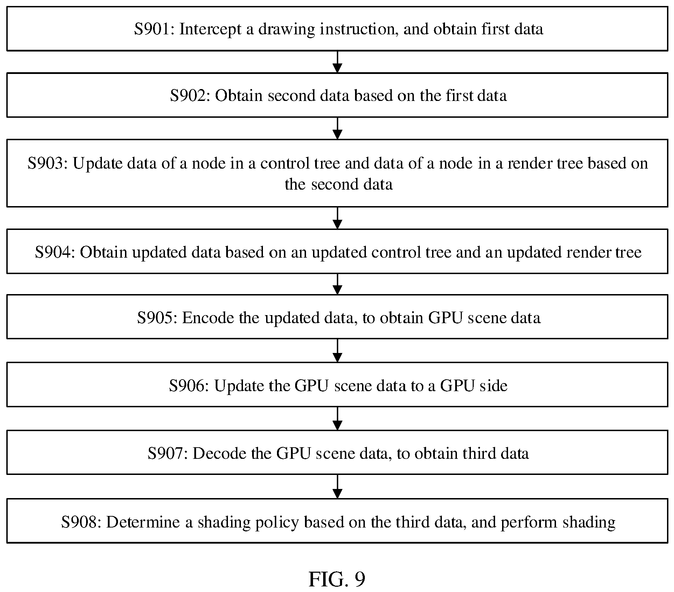

For example, FIG. 9 is a schematic flowchart of a rendering method 900 according to an embodiment of this application. As shown in FIG. 9, the method 900 includes the following steps.

S901: Intercept a drawing instruction of a primitive, and obtain first data of the primitive.

The drawing instruction of the primitive is a drawing instruction (or a drawing command) that is of the primitive and that is output in event response and measurement and layout steps.

The first data is data related to the drawing instruction. Optionally, the first data includes one or more of data indicating a type of a primitive, data indicating a location of the primitive, and data indicating a style of the primitive. In addition, the first data may further include data indicating other information of the primitive. This is not limited in this application.

S902: Obtain second data of the primitive based on the first data of the primitive.

The second data is obtained by converting the first data into an identifiable format. In other words, format conversion is performed on the first data, to convert the first data into a format that can be identified in this embodiment. That is, the second data is obtained. Similarly, the second data is also the data related to the drawing instruction, and the second data also includes one or more of the data indicating the type of the primitive, the data indicating the location of the primitive, and the data indicating the style of the primitive. In addition, the second data may further include the data indicating the other information of the primitive. This is not limited in this application.

It can be understood that step S901 and step S902 are optional steps, and the first data or the second data may be obtained in another manner, for example, may be sent by a third-party module.

S903: Update data of a node in a control tree and data of a node in a render tree based on the second data.

S904: Obtain updated data based on an updated control tree and an updated render tree.

It can be understood that S901 to S903 are optional steps. In the method in this embodiment of this application, the updated data may alternatively be obtained in another manner, for example, may be sent by a third-party apparatus or module.

S905: Encode the updated data, to obtain graphics processing unit GPU scene data.

Optionally, the GPU scene data includes encoded updated data and encoded data that is not updated. The updated data is data corresponding to a node whose data is updated in a node in the control tree and a node in the render tree, and the data that is not updated is data corresponding to a node whose data is not updated in the node in the control tree and the node in the render tree.

Optionally, the GPU scene data includes the data indicating the type of the primitive and the data indicating the index information of the primitive.

Optionally, the index information of the primitive includes one or more of a transformation matrix index of the primitive, a style information index of the primitive, and a texture index of the primitive, and may further include other index information (for example, cache index information) of the primitive. This is not limited in this application.

Optionally, the updated data can be obtained based on the updated control tree and the updated render tree. The updated data may be understood as data indicating content that needs to be drawn in a current frame, and the content that needs to be drawn in the current frame corresponds to an updated part of the updated control tree and the updated render tree.

Optionally, the updated data has a first relationship. The first relationship is a sequence relationship between the data (namely, the updated data) indicating the content that needs to be drawn in the current frame. The updated data further includes data indicating a type of a primitive that needs to be drawn.

Optionally, the GPU scene data includes a primitive array, primitiveBuffer, a transform object array, a paint object array, and an image object array.

Optionally, the updated data may be serialized based on the first relationship.

S906: Update the GPU scene data to a GPU side.

It can be understood that steps S901 to S904 occur on a CPU side of a rendering apparatus, and step S905 occurs on the CPU side and a GPU side of the rendering apparatus.

S907: Decode the GPU scene data, to obtain third data.

The third data includes the updated data, and the updated data is the data corresponding to the node whose data is updated in the node in the control tree and the node in the render tree.

Optionally, the third data further includes data that is not updated, and the data that is not updated is the data corresponding to the node whose data is not updated in the node in the control tree and the node in the render tree.

Optionally, the third data includes the data indicating the type of the primitive and the data indicating the index information of the primitive.

Optionally, the index information of the primitive includes one or more of a transformation matrix index of the primitive, a style information index of the primitive, and a texture index of the primitive, and may further include other index information (for example, cache index information) of the primitive. This is not limited in this application.

S908: Determine a shading policy based on the third data, and perform shading.

Optionally, step S901 to step S903 are optional steps. For example, step S902 may be omitted when the first data is in an identifiable format.

In this embodiment of this application, a data-driven rendering pipeline is used to draw the primitive, and merely data updating is performed in all procedures, so that an original instruction-based triangle rendering pipeline can be broken through, and load of the CPU can be reduced. In addition, buffers for encoding all resources and primitives are independent of each other, and are connected to each other based on indexes, so that spatial locality of data can be improved, and incremental updating of data resources can be supported, to reduce memory transmission overheads. In addition, in the method, the primitive may be drawn in a dual data-driven manner on a CPU side and a GPU side, and load on the CPU side is migrated to a GPU, to fully use a parallel feature of the GPU. Therefore, overall power consumption and load are reduced. In addition, in the method, the hook layer is used to intercept the instruction stream, so that the method can be compatible with an existing application ecosystem, and the existing application can be optimized.

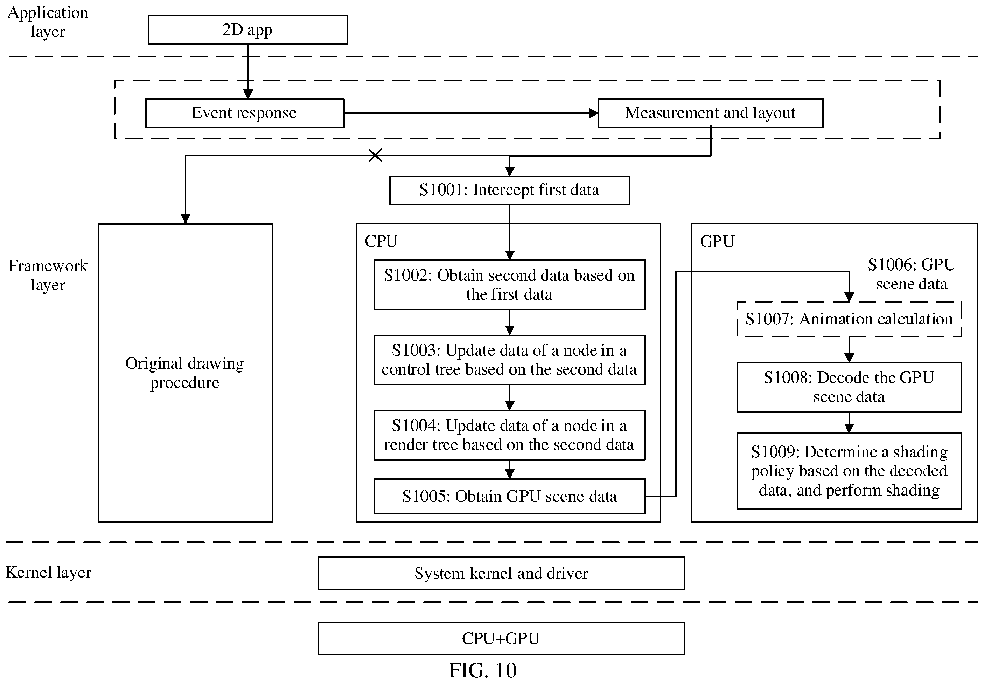

For example, FIG. 10 is a schematic flowchart of a rendering method 1000 according to an embodiment of this application. The method 1000 may be applied to, for example, an application framework layer of an electronic device.

It can be learned from FIG. 10 that optionally, the method 1000 may further include an event response step (responding to an application operation at an application layer) and a measurement and layout step.

The method 1000 includes the following steps.

S1001: Intercept first data related to drawing content (intercept a drawing instruction of a primitive, and obtain first data of the primitive).

The drawing instruction of the primitive is a drawing instruction (or a drawing command) that is of the primitive and that is output in event response and measurement and layout steps.

Explanations of the first data are described in detail in the embodiments shown in FIG. 7 and FIG. 9. For brevity, details are not described herein again.

Optionally, the first data may be intercepted in a hook manner.

Details may be as follows: cutting off a native instruction recording path (namely, an original instruction stream delivery path), encapsulating all subsequent interfaces provided in this embodiment, and forwarding an instruction stream to a first interface provided in this embodiment. The instruction stream enters step S1002 through the first interface.

S1002: Obtain second data based on the first data.

Explanations of the second data are described in detail in the embodiments shown in FIG. 7 and FIG. 9. For brevity, details are not described herein again.

S1003: Update data of a node in a control tree based on the second data.

S1004: Update data of a node in a render tree based on the second data.

S1005: Obtain graphics processing unit GPU scene data.

Specifically, updated data is first obtained based on an updated control tree and an updated render tree, and then the updated data is encoded, to obtain the GPU scene data.

Optionally, the updated data has a sequence relationship, and the updated data is encoded (serialized) based on the sequence relationship between the updated data.

Explanations of the GPU scene data are described in detail in the embodiments shown in FIG. 7 and FIG. 9. For brevity, details are not described herein again.

S1006: Update the GPU scene data to a GPU side.

S1007: After a GPU receives the GPU scene data, if the GPU scene data includes data indicating animation information, perform animation calculation, and further perform step S1008; or if the GPU scene data does not include data indicating animation information, directly skip this step, and perform step S1008.

Optionally, if a current primitive has the animation information, the animation information of the current primitive is calculated and updated by using an animation shader (animation shader, AS); and after calculation is completed, data obtained through animation calculation is re-encoded into the GPU scene data.

It can be understood that the animation information that is of the current primitive and that is calculated by using the AS is a location at which the current primitive (in a current frame) is finally located. In this case, geometric information of the current primitive is basically determined.

S1008: Decode the GPU scene data, to obtain third data.

It can be understood that if animation calculation is performed before S1008, the GPU scene data decoded herein is the GPU scene data obtained through re-encoding after animation calculation is completed in S1007.

The third data includes the updated data, and the updated data is the data corresponding to the node whose data is updated in the node in the control tree and the node in the render tree.

Optionally, the third data further includes data that is not updated, and the data that is not updated is the data corresponding to the node whose data is not updated in the node in the control tree and the node in the render tree.

Optionally, the third data includes one or more of data indicating a type of a currently drawn primitive, data indicating a transformation matrix index of the current primitive, data indicating a style information index of the current primitive, and data indicating a texture index of the current primitive.

S1009: The GPU determines a shading policy based on the third data, and performs shading based on the shading policy.

In this embodiment of this application, when animation calculation needs to be performed, the GPU side performs animation calculation, so that load on a CPU side is migrated to the GPU, and a parallel feature of the GPU can be fully used, to reduce overall power consumption and load.

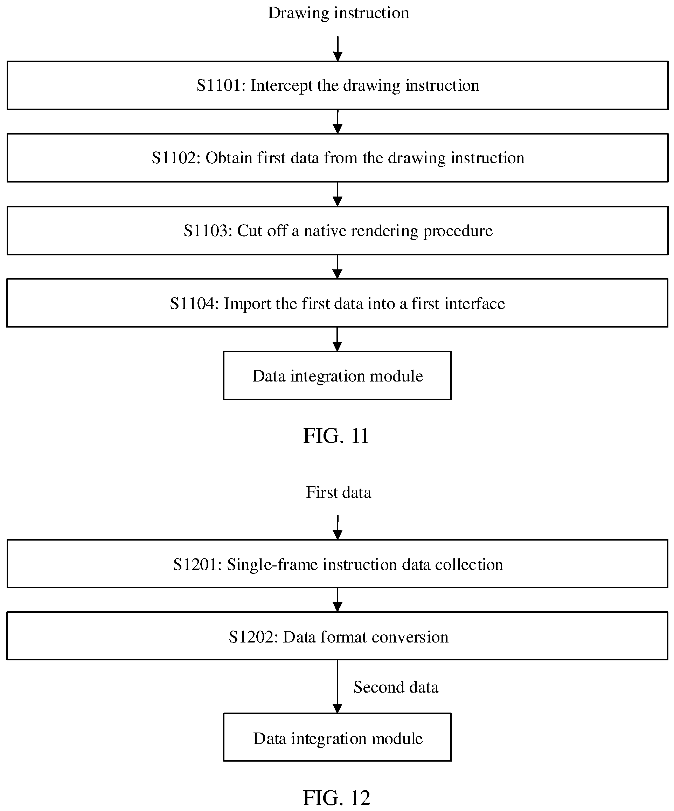

To more clearly understand a process of intercepting the instruction of the primitive and obtaining the first data, for example, FIG. 11 is a schematic flowchart of a method 1100 for intercepting first data according to an embodiment of this application. As shown in FIG. 11, the method 1100 includes the following steps.

S1101: Intercept a drawing instruction after an event response.

S1102: Obtain the first data from the intercepted drawing instruction.

The first data is data related to the drawing instruction. Optionally, the first data includes one or more of data indicating a type of a primitive, data indicating a location of the primitive, and data indicating a style of the primitive. In addition, the first data may further include data indicating other information of the primitive. This is not limited in this application.

S1103: Cut off a native rendering procedure.

Optionally, the native rendering procedure may be a native Skia rendering process.

S1104: Import the first data into a first interface.

The first interface is an exposed interface disposed in a solution of this application, and the first data flows into a data integration module through the first interface.

In an example, the method is applied to an electronic device provided with a HarmonyOS system. This embodiment of this application is implemented at an application framework layer of the HarmonyOS system. Specific operations are as follows: Source code of Skia in an HWUI component of the HarmonyOS system is modified, and a hook layer is created. After the event response, the hook layer intercepts the drawing instruction, and obtains and forwards the first data. In this process, the native Skia rendering process is cut off, and the first data is forwarded to the data integration module provided in this embodiment of this application.

Optionally, an execution sequence of step S1103 and S1101 and S1102 is not limited.

In this embodiment of this application, an instruction-driven drawing procedure is converted into a data-driven drawing procedure by intercepting the instruction and obtaining the data, so that only data updating is performed in all procedures in a drawing process, to significantly reduce CPU overheads.

To more clearly understand a process in which a data integration module integrates first data, for example, FIG. 12 is a schematic flowchart of a data integration method 1200 according to an embodiment of this application. As shown in FIG. 12, the method 1200 includes the following steps.

S1201: Perform single-frame instruction data collection based on first data.

S1202: Perform data format conversion on collected single-frame instruction data, to obtain second data.

The second data is obtained by converting the first data into an identifiable format. In other words, format conversion is performed on the first data, to convert the first data into a format that can be identified in this embodiment. That is, the second data is obtained. Similarly, the second data is also the data related to the drawing instruction, and the second data also includes one or more of the data indicating the type of the primitive, the data indicating the location of the primitive, and the data indicating the style of the primitive. In addition, the second data may further include the data indicating the other information of the primitive. This is not limited in this application.

In this embodiment of this application, data type conversion is performed on obtained data, and the first data is converted into a data format that can be identified by a node in a control tree and a node in a render tree in the solution of this application, to facilitate subsequent updating of data of the node in the control tree and the node in the render tree data.

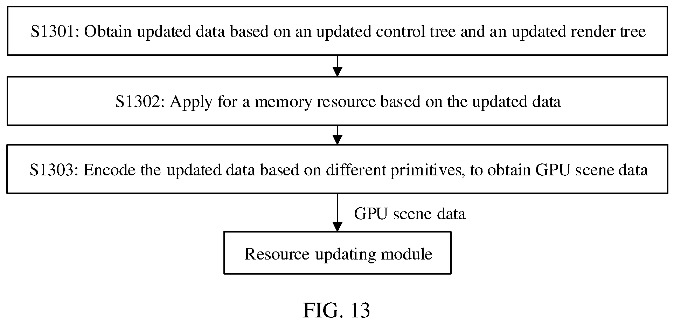

To more clearly understand a process of defining GPU scene data, for example, FIG. 13 is a schematic flowchart of a method 1300 for defining GPU scene data according to an embodiment of this application. As shown in FIG. 13, the method 1300 includes the following steps.

S1301: Obtain updated data based on an updated control tree and an updated render tree.

Optionally, the updated data includes one or more of data indicating a type of a currently drawn primitive, data indicating a transformation matrix index of the current primitive, data indicating a style information index of the current primitive, and data indicating a texture index of the current primitive.

S1302: Apply for a memory resource based on the updated data.

S1303: Encode the updated data based on different primitives, to obtain the GPU scene data.

Optionally, the GPU scene data includes a primitive array, primitiveBuffer, a transform object array, a paint object array, and an image object array.

Optionally, the GPU scene data includes encoded updated data and encoded data that is not updated. The data that is not updated is data corresponding to a node whose data is not updated in a node in a control tree and a node in a render tree. Specific descriptions of the GPU scene data are provided in detail in the embodiment shown in FIG. 9. For brevity, details are not described herein again.

Optionally, the updated data may be serialized based on the first relationship.

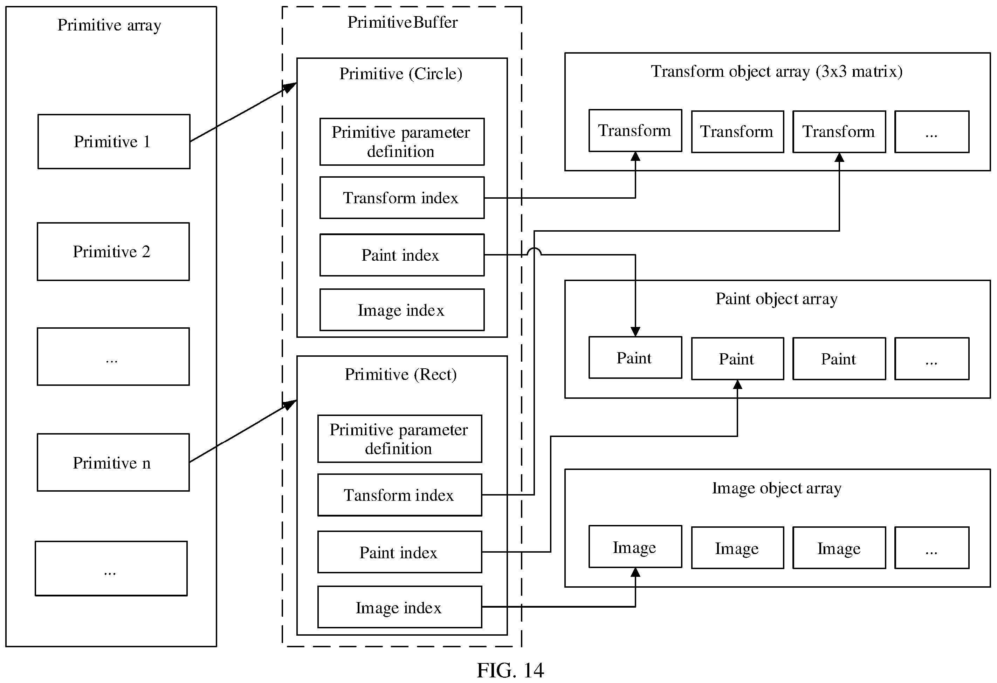

To more clearly understand step S1303, for example, with reference to FIG. 14, a primitive encoding method 1400 provided in an embodiment of this application is described.

It can be learned from FIG. 14 that, in the primitive encoding method 1400, a primitive array, a primitive buffer, a transform object array, a paint object array, and an image object array are used.

Primitive array: Each primitive is drawn as a quad. A plurality of quads form an encoded primitive array.

Primitive buffer: Each primitive has a data structure definition manner of the primitive. Data of all the primitives is combined into a memory to form the primitive buffer.

The transform object array includes transform information of all the primitives.

The paint object array includes paint information of all the primitives.

The image object array includes image information of all the primitives.

Specifically, the encoded primitive array may be indexed to the primitive buffer. The primitive buffer includes a transform index, and is further indexed to the transform buffer based on the transform index. The primitive buffer includes a paint index, and is further indexed to the paint buffer based on the paint index. The primitive buffer includes an image index, and is further indexed to the image buffer based on the image index.

In this embodiment of this application, buffers for encoding all resources and primitives are independent of each other, and are connected to each other based on indexes, so that spatial locality of data can be improved, and incremental updating of data resources can be supported, to reduce memory transmission overheads.

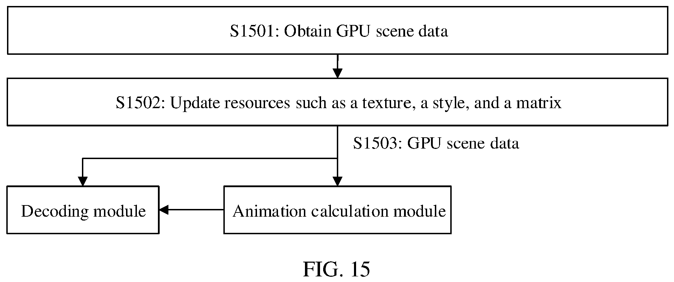

To more clearly understand a resource updating process, for example, FIG. 15 is a schematic flowchart of a resource updating (updating GPU scene data to a GPU side) method 1500 according to an embodiment of this application. As shown in FIG. 15, the method 1500 includes the following steps.

S1501: Obtain the GPU scene data.

Optionally, the GPU scene data includes encoded updated data and encoded data that is not updated. The data that is not updated is data corresponding to a node whose data is not updated in a node in a control tree and a node in a render tree.

Specific descriptions of the GPU scene data are provided in detail in the embodiment shown in FIG. 9. For brevity, details are not described herein again.

S1502: Update resources such as a texture of a current primitive, a style of the current primitive, and a matrix of the current primitive based on the GPU scene data.

S1503: Transmit the GPU scene data to an animation calculation module or a decoding module on the GPU side.

If the GPU scene data includes animation information, the GPU scene data is sent to the animation calculation module; or if the GPU scene data does not include animation information, the GPU scene data is sent to the decoding module.

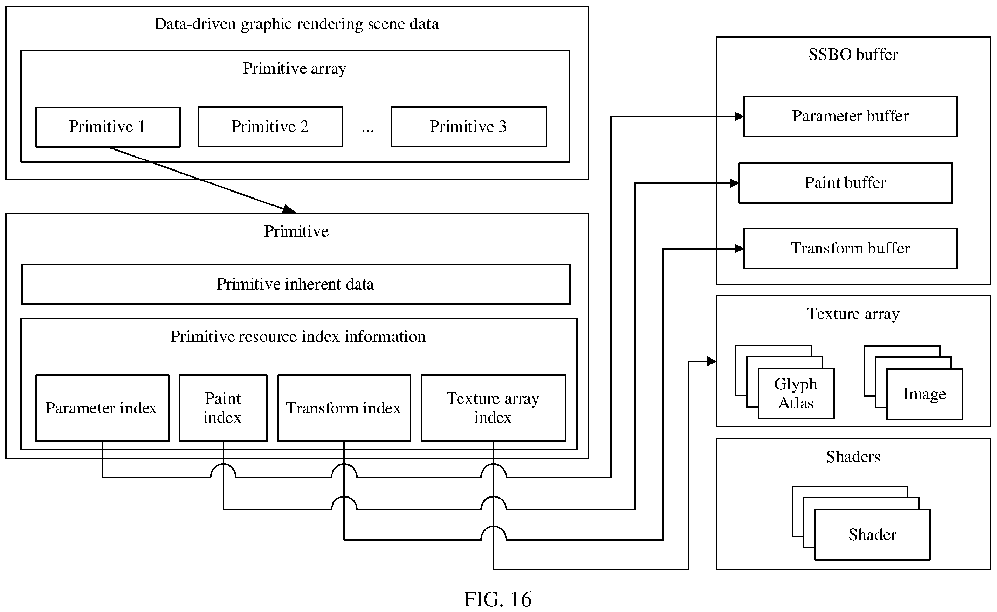

To more clearly understand the resource updating method 1500, for example, with reference to FIG. 16, a diagram of resource updating according to an embodiment of this application is described.

There are two data updating policies: full updating and incremental updating. The full updating is to fully update all data, and the incremental updating is to update data based on a requirement.

Usually, for a primitive array and a primitive buffer with a small amount of data, when there is a change, full or partially updating is performed; and for a paint buffer, an image buffer, and a transform buffer with a large amount of data, incremental updating is performed based on a requirement.

In other words, data-driven graphic rendering scene data (primitive array) and the primitive buffer (primitive inherent data and primitive resource index information) described in FIG. 16 are fully or partially updated when there is a change, and an SSBO buffer (a paint buffer, an image buffer, and a transform buffer), a texture array, and a shader are incrementally updated based on a requirement when there is a change.

In this embodiment of this application, incremental updating of data can be supported, and computing efficiency and transmission efficiency of a rendering process can be improved.

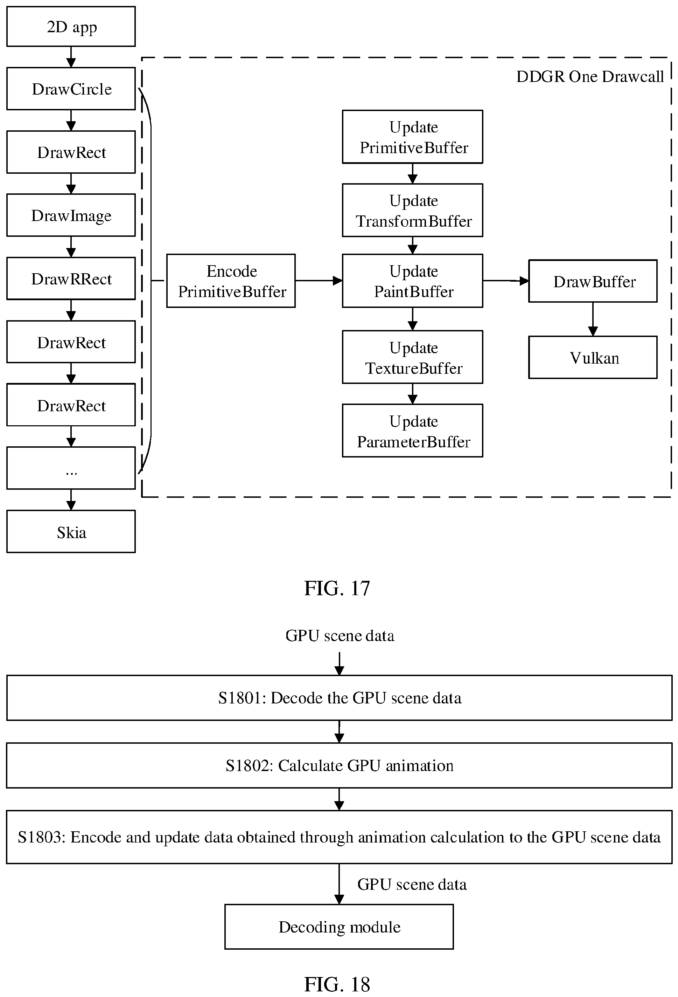

For example, FIG. 17 is an instruction flowchart in a primitive drawing process according to an embodiment of this application. It can be learned from FIG. 17 that, after a primitive buffer is encoded and data in each buffer is updated, all primitives can be drawn by using one drawcall. In this way, overheads in a primitive drawing process are significantly reduced.

To more clearly understand an animation calculation process, for example, FIG. 18 is a schematic flowchart of an animation calculation method 1800 according to an embodiment of this application. As shown in FIG. 18, the method 1800 includes the following steps.

S1801: Decode GPU scene data.

Optionally, in this step, decoding the GPU scene data may be decoding only a part of the GPU scene data, and the part of the GPU scene data is encoded data related to animation calculation.

S1802: Calculate GPU animation.

S1803: Encode and update data obtained through animation calculation to the GPU scene data.

Details may be as follows: After receiving the GPU scene data, an animation calculation module decodes data related to animation information in the GPU scene data, and performs animation calculation based on the data related to the animation information after decoding. After animation calculation is completed, data obtained through animation calculation is re-encoded and updated to the GPU scene data, and further, the GPU scene data is sent to a decoding module.

Optionally, in this embodiment of this application, a data-driven animation shader (animation shader, AS) is used to perform GPU animation calculation.

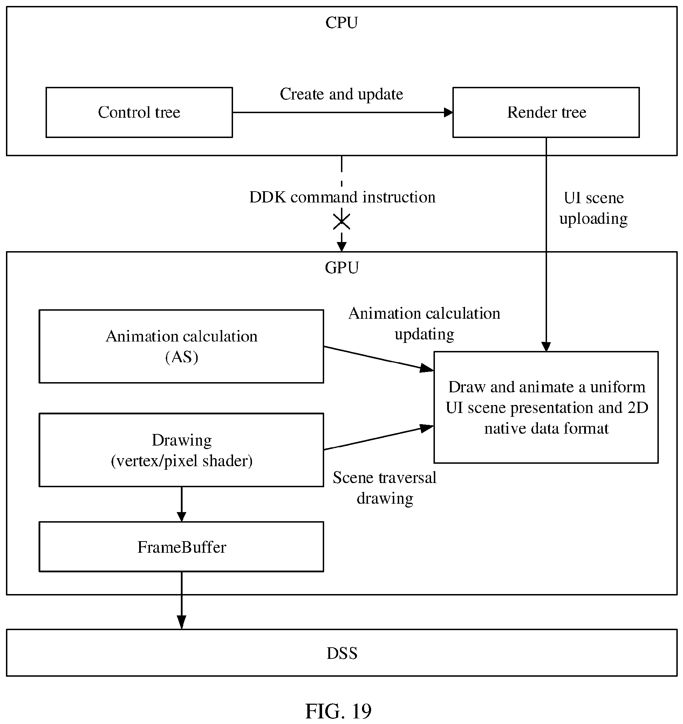

For example, FIG. 19 is a diagram of performing GPU animation calculation by using an animation shader (animation shader, AS) according to an embodiment of this application.

It can be learned from FIG. 19 that, in this embodiment of this application, the data-driven animation shader AS is used to perform animation calculation, data input to the AS is scene native semantic data, and output data may be directly decoded in a GPU scene data decoding phase without a need to perform steps such as instruction recording. In this solution, more information can be obtained, and a drawing process can be cleaner and more efficient.

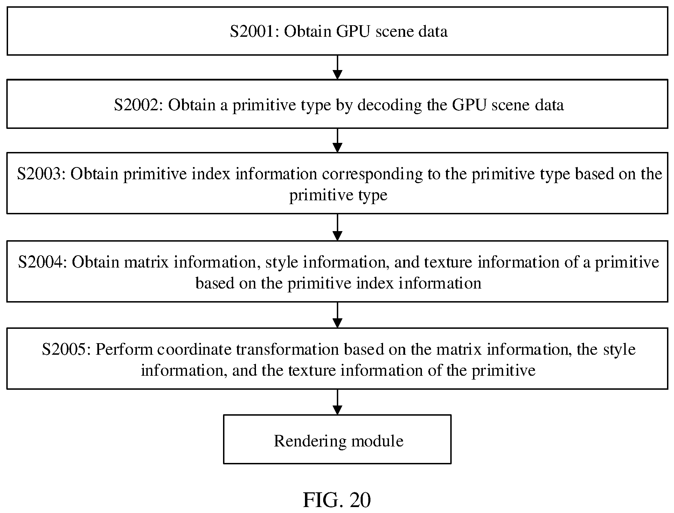

To more clearly understand a process of decoding GPU scene data, for example, FIG. 20 is a schematic flowchart of a method 2000 for decoding GPU scene data according to an embodiment of this application. As shown in FIG. 20, the method 2000 includes the following steps.

S2001: Obtain the GPU scene data.

Optionally, the GPU scene data includes encoded updated data and encoded data that is not updated. The updated data is data corresponding to a node whose data is updated in a node in a control tree and a node in a render tree, and the data that is not updated is data corresponding to a node whose data is not updated in the node in the control tree and the node in the render tree.

Optionally, the GPU scene data includes data indicating a type of a primitive and data indicating index information of the primitive.

Optionally, the index information of the primitive includes one or more of a transformation matrix index of the primitive, a style information index of the primitive, and a texture index of the primitive, and may further include other index information (for example, cache index information) of the primitive. This is not limited in this application.

Optionally, the updated data includes one or more of data indicating a type of a currently drawn primitive, data indicating a transformation matrix index of the current primitive, data indicating a style information index of the current primitive, and data indicating a texture index of the current primitive. The updated data may further include data indicating other information of the current primitive. This is not limited in this application.

S2002: Obtain a primitive type by decoding the GPU scene data.

The primitive type is the type of the currently drawn primitive.

Specifically, a type and specific content of a primitive that needs to be drawn in a current frame are decoded.

S2003: Obtain primitive index information corresponding to the primitive type based on the primitive type.

Optionally, the index information corresponding to the primitive type includes one or more of a transformation matrix index of the primitive, a style information index of the primitive, and a texture index of the primitive, and may further include other index information (for example, cache index information) of the primitive. This is not limited in this application. It can be understood that step S2002 and step S2003 are actually obtaining the third data by decoding the GPU scene data.

S2004: Obtain matrix information, style information, and texture information of the primitive based on the primitive index information.

S2005: Perform coordinate transformation based on the matrix information, the style information, and the texture information of the primitive.

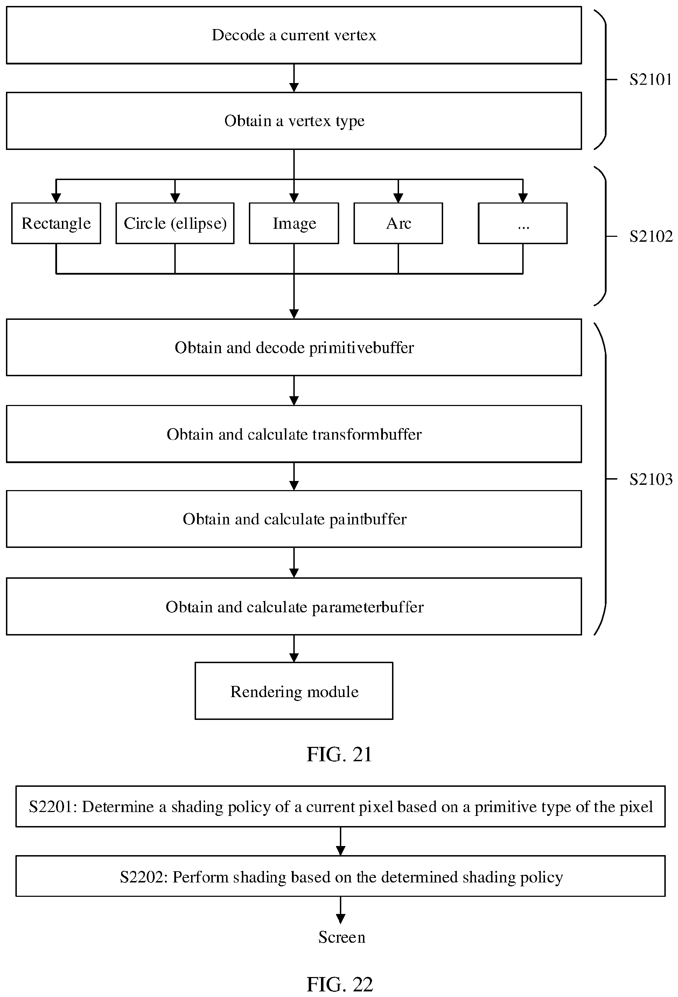

For example, based on the embodiment shown in FIG. 20, FIG. 21 is a diagram of a decoding procedure of a vertex shader (vertex shader, VS) according to an embodiment of this application. As shown in FIG. 21, the decoding procedure includes the following steps.

S2101: The VS processes four vertices of a quad, where InstanceID of each quad is an encoded primitive array; and decodes InstanceID, to obtain a vertex type and an offset in a primitive buffer.

S2102: Enter a customized primitive buffer decoding branch of different primitives based on different primitive types and the offset in the primitive buffer that are obtained through decoding.

S2103: Obtain all information (transform, a control point parameter, a paint object, and the like) related to the primitive based on the primitive buffer, and output the information to a vertex shader output structure. In addition, a primitive index may also be output to the vertex shader output structure. In this way, primitive data may also be obtained from a fragment shader.

In this embodiment of this application, it is equivalent to providing a decoupled GPU buffer organization manner. Buffers for encoding all resources and primitives are independent of each other, and are connected to each other based on indexes, so that spatial locality of data can be improved, and incremental updating of data resources can be supported, to reduce memory transmission overheads. In addition, a data-driven animation shader AS is used. Data input to the AS is scene native semantic data, and output data may be directly decoded in a GPU scene decoding phase without a need to perform steps such as instruction recording. In this way, more information can be obtained, and a drawing process is cleaner and more efficient.

To more clearly understand a process of performing shading based on a shading policy, for example, FIG. 22 is a schematic flowchart of a method 2200 for performing shading based on a shading policy according to an embodiment of this application. As shown in FIG. 22, the method 2200 includes the following steps.

S2201: Determine a shading policy of a current pixel based on a primitive type of the pixel.

Optionally, the shading policy of the current pixel may be further determined based on the primitive type and style information of the current pixel.

Optionally, the shading policy may be further determined based on one or more of the primitive type, the style information, texture information, and location information of the current pixel.

S2202: Perform shading based on the determined shading policy.

Specifically, the pixel is drawn on a screen based on the shading policy with reference to the style information and/or the texture information corresponding to the pixel.

Optionally, the shading policy may be further determined based on one or more of the primitive type, the style information, the texture information, the location information, transformation matrix information, and cache information of the current pixel.

Before step S2201, the method further includes a step: GPU hardware executes a rasterization policy, so that all primitives are converted into pixels, and then the pixels enter a fragment/pixel shader (fragment shader, FS).

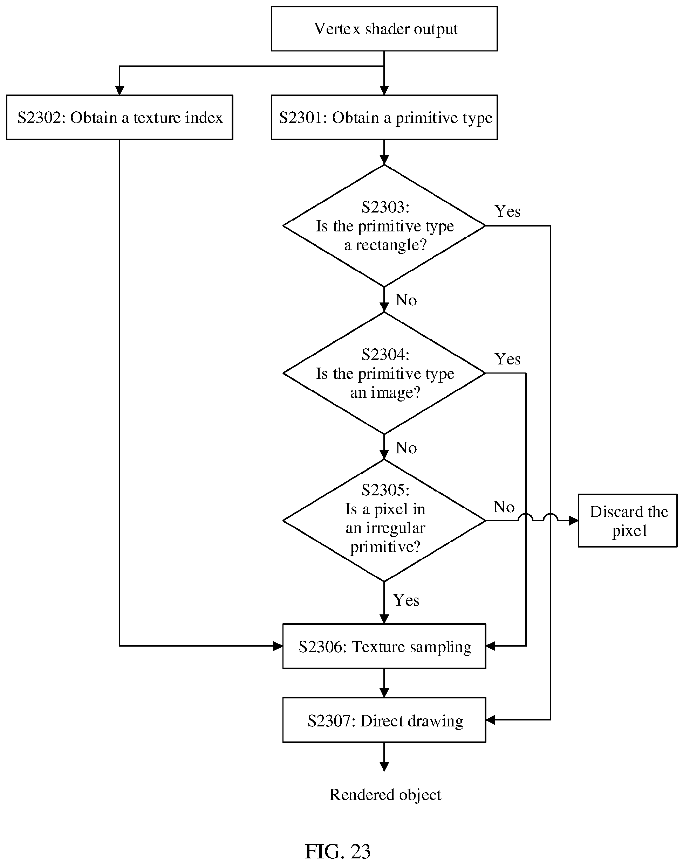

For example, based on the embodiment shown in FIG. 22, FIG. 23 is a schematic flowchart of a drawing method of a fragment/pixel shader FS according to an embodiment of this application. As shown in FIG. 23, the method includes the following steps.

S2301 and S2302: Obtain a primitive type and a texture index (index) corresponding to a current pixel (Pixel) from a vertex shader output (Vertex Shader Output) structure, and obtain a location of the current pixel from a GPU.

S2303: Determine whether the primitive type corresponding to the current pixel is a rectangle; and perform step S2307 if the primitive type corresponding to the current pixel is a rectangle; or perform step S2304 if the primitive type corresponding to the current pixel is not a rectangle.

S2304: Determine whether the primitive type corresponding to the current pixel is an image; and perform step S2306 if the primitive type corresponding to the current pixel is an image; or perform step S2305 if the primitive type corresponding to the current pixel is not an image.

S2305: Determine whether the current pixel is in an irregular primitive, and perform step S2306 if the current pixel is in the irregular primitive; or discard the pixel if the current pixel is not in the irregular primitive.

Specifically, a signed distance (signed distance, SD) between the current pixel and the prim is calculated. Whether the current pixel is in the irregular primitive is determined based on the SD distance. If the current pixel is not in the irregular primitive (for example, the current pixel is outside a circle or inside a rectangle), the current pixel is directly discarded.

S2306: Perform texture sampling on the pixel.

S2307: Perform shading calculation on the pixel, to obtain a rendered object.

To more clearly understand beneficial effects of the foregoing solution provided in embodiments of this application, the following describes, for example, beneficial effects of the rendering method provided in embodiments of this application with reference to Table 1.

A same rendering experiment is performed on Skia+vulkan and data-driven graph rendering scenario (DDGR triangularization)+vulkan in the same condition. A verification environment of the experiment is dual-framework@P50 (Qualcomm 888 platform). A specific experiment is an image library simulation application (108 different images, and rotation).

**Table 1**

| | Skia+vulkan | DDGR triangularization+vulkan | Comparison |
|---|---|---|---|
| Total current | 512 mA | 462 mA | Reduced by 50 mA, and optimized by 9.7% |
| Rendering time consumption | 10 ms | 4 ms | Reduced by 60% |
| Load of a CPU of a render thread | 0.97 G cycles/s | 0.26 G cycles/s | Reduced by 73.3% |
| Upper limit of a frame rate for lock-core lock-frequency off-screen rendering | 99 fps | 290 fps | Increased by 193% |

As shown in Table 1, CPU-cycles of the render thread are reduced from 31 G to 8 G within 30 seconds, and are reduced by 73.3%. For time consumption of the render thread, in comparison with a native path (Skia+vulkan), a running time per frame of DDGR is reduced by 60%, and an execution time of the render thread in middle and big cores is reduced by 90.2%.

Therefore, compared with triangular drawing, a primitive buffer requires a lower bandwidth, so that a bandwidth on a CPU side in a DDGR solution is significantly lower than that in a native solution, to improve 2D graphics rendering efficiency, reduce a CPU execution time, improve a frame rate in a heavy load scenario, and reduce overall power consumption.

For example, Table 2 shows macro data of an energy efficiency gain of DDGR in an image library simulation scenario.

**Table 2**

| Mobile phone status (different solutions) | Average frame rate/frame | Normalized current | CPU-C1 (load) | CPU-C1 (frequ ency) | CPU-C2 (load) | CPU-C2 (frequ ency) | CPU-C3 (load) | CPU-C3 (frequ ency) | GPU (load) | GPU (frequ ency) | DDR (frequ ency) |
|---|---|---|---|---|---|---|---|---|---|---|---|
| P50_DDGR triangulariza tion backend | 87.98 | 464.18 | 44.47 | 1611. 62 | 1.23 | 745.9 02 | 0.05 | 844.0 | 10.01 | 315.0 | 554.6 34 |
| P50_DDGR triangularization backend | 88.03 | 462.73 | 44.35 | 1608. 92 | 1.33 | 725.2 91 | 0.06 | 844.0 | 10.01 | 315.0 | 523.0 03 |
| P50_DDGR triangulariza tion backend | 87.89 | 461.55 | 44.93 | 1611. 66 | 1.49 | 733.4 17 | 0.17 | 844.0 | 9.92 | 315.0 | 547.3 72 |
| P50_native path_SkiaV ulkan | 87.18 | 530.28 | 61.31 | 1612. 0 | 4.6 | 860.8 66 | 0.19 | 844.0 | 22.94 | 315.0 | 838.1 27 |
| P50_native path_SkiaV ulkan | 87.29 | 497.6 | 60.01 | 1611. 3 | 3.05 | 823.8 34 | 0.08 | 844.0 | 23.1 | 315.0 | 788.6 61 |
| P50_native path_SkiaV ulkan | 87.11 | 510.18 | 60.41 | 1612. 0 | 3.64 | 866.4 45 | 0.15 | 844.0 | 23.05 | 315.0 | 782.4 55 |
| P50_native path_opengl | 87.38 | 503.38 | 60.4 | 1612. 0 | 2.33 | 789.4 54 | 0.28 | 844.0 | 11.18 | 315.0 | 777.9 58 |
| P50_native path_opengl | 87.29 | 479.0 | 58.93 | 1612. 0 | 2.39 | 783.7 | 0.18 | 844.0 | 11.23 | 315.0 | 726.0 68 |
| P50_native path_opengl | 88.88 | 500.49 | 56.58 | 1607. 46 | 4.71 | 866.5 13 | 0.39 | 857.4 43 | 11.88 | 315.0 | 751.7 9 |

It can be learned from Table 2 that energy efficiency gain of DDGR in the image library simulation scenario are as follows: Average frame rates are basically the same, normalized current power consumption is reduced by 49.9 mA, load of a small core (CPU-C1) is reduced from 60.58% to 44.58%, load of a middle core (CPU-C2) is reduced from 3.76% to 1.35%, a frequency of the middle core (CPU-C2) is reduced from 850 M to 734 M, load of a GPU is reduced from 23.03% to 9.98%, and a DDR frequency is reduced from 803 M to 541 M.

An embodiment of this application further provides a computer-readable medium. The computer-readable medium stores program code, and when the computer program code is run on a computer, the computer is enabled to perform any method in FIG. 9 to FIG. 13.

An embodiment of this application further provides a chip, including at least one processor and a memory. The at least one processor is coupled to the memory, and is configured to read and execute instructions in the memory, to perform any method in FIG. 9 to FIG. 23.

An embodiment of this application further provides an electronic device. The electronic device includes any shown storage apparatus in FIG. 7 or FIG. 8, to perform any method in FIG. 9 to FIG. 23.

An embodiment of this application further provides an electronic device, including at least one processor and a memory. The at least one processor is coupled to the memory, and is configured to read and execute instructions in the memory, to perform any method in FIG. 9 to FIG. 23.

The foregoing embodiments may be used separately, or may be used in combination to achieve different technical effects.

All methods provided in this application may be applied to an electronic device provided with any operating system (for example, a HarmonyOS system or an Android system) having a graphical interface. All apparatuses provided in this application may be applied to an electronic device provided with any operating system (for example, a HarmonyOS system or an Android system) having a graphical interface.

All methods provided in this application may be applied to 2D rendering, or may be applied to 3D rendering.

One or more of the modules or units described in this specification may be implemented by software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may include but is not limited to at least one of the following: a central processing unit (central processing unit, CPU), a microprocessor, a digital signal processor (DSP), a microcontroller unit (microcontroller unit, MCU), and a computing device used for running software like an artificial intelligence processor. Each computing device may include one or more cores used to execute software instructions to perform operations or processing. The processor may be built in a SoC (system on a chip) or an application-specific integrated circuit (application-specific integrated circuit, ASIC), or may be an independent semiconductor chip. In addition to a core configured to execute software instructions to perform an operation or processing, the processor may further include a necessary hardware accelerator, for example, a field programmable gate array (field programmable gate array, FPGA), a PLD (programmable logic device), or a logic circuit that implements a dedicated logic operation.

When the foregoing modules or units described in this specification are implemented by hardware, the hardware may be any one of or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software or may not depend on software to execute the foregoing method procedure.

When the modules or units described in this specification are implemented by using software, all or some of the modules or units may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by a computer and has a configuration capability similar to a cache, or a data storage device, such as a server or a data center, integrating one or more usable media that have a configuration capability similar to a cache.

A person of ordinary skill in the art may be aware that the units and method steps described with reference to the examples in embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separated, and parts displayed as units may or may not be physical units, that is, may be located at one place, or may be distributed on a plurality of network units. Some or all of the units may be selected based on an actual requirement, to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A rendering method, wherein the method comprises:
obtaining updated data of a primitive, wherein the updated data is data corresponding to a node whose data is updated in a node in a control tree and a node in a render tree; and
encoding the updated data, to obtain first scene data, wherein the first scene data comprises data indicating a type of the primitive and data indicating index information of the primitive, and the first scene data is used for rendering.

2. The method according to claim 1, wherein the obtaining updated data comprises:
obtaining second data of the primitive, wherein the second data is data related to a drawing instruction of the primitive;
performing node data updating on the control tree and the render tree based on the second data; and
obtaining the updated data based on an updated control tree and an updated render tree.

3. The method according to claim 2, wherein the obtaining second data of the primitive comprises:
intercepting the drawing instruction of the primitive;
obtaining first data of the primitive based on the drawing instruction of the primitive; and
obtaining the second data of the primitive based on the first data of the primitive, wherein the second data is data obtained after the first data is converted into an identifiable format.

4. The method according to any one of claims 1 to 3, wherein the encoding the updated data comprises:
encoding the updated data based on a sequence relationship between the updated data.

5. The method according to any one of claims 1 to 4, wherein the method further comprises:
updating the first scene data to a graphics processing unit GPU or a neural-network processing unit NPU, wherein the first scene data is used by the GPU or the NPU for rendering.

6. The method according to claim 3, wherein the second data comprises one or more of the data indicating the type of the primitive, data indicating a location of the primitive, and data indicating a style of the primitive.

7. The method according to any one of claims 1 to 6, wherein the index information of the primitive comprises one or more of a transformation matrix index of the primitive, a style information index of the primitive, and a texture index of the primitive.

8. The method according to any one of claims 1 to 7, wherein the first scene data further comprises one or more of data indicating a transformation matrix of the primitive, data indicating style information of the primitive, and data indicating a texture of the primitive.

9. A rendering method, wherein the method comprises:
obtaining first scene data, wherein the first scene data comprises data indicating a type of a primitive and data indicating index information of the primitive;
decoding the first scene data, to obtain third data, wherein the third data comprises updated data of the primitive, and the updated data is data corresponding to a node whose data is updated in a node in a control tree and a node in a render tree; and
determining a shading policy based on the third data, and performing shading based on the shading policy.

10. The method according to claim 9, wherein the first scene data comprises data indicating that animation information of the primitive needs to be calculated, and before the decoding the first scene data, to obtain third data, the method further comprises:
calculating the animation information of the primitive based on the first scene data; and
encoding the animation information of the primitive into the first scene data.

11. The method according to any one of claims 9 or 10, wherein the index information of the primitive comprises one or more of a transformation matrix index of the primitive, a style information index of the primitive, and a texture index of the primitive.

12. The method according to any one of claims 9 to 11, wherein the first U scene data further comprises one or more of data indicating a transformation matrix of the primitive, data indicating style information of the primitive, and data indicating a texture of the primitive.

13. The method according to any one of claims 9 to 12, wherein the third data comprises the data indicating the type of the primitive and the data indicating the index information of the primitive.

14. The method according to any one of claims 9 to 13, wherein the third data further comprises data that is not updated, and the data that is not updated is data corresponding to a node whose data is not updated in the node in the control tree and the node in the render tree.

15. The method according to any one of claims 9 to 14, wherein the determining a shading policy based on the third data comprises: determining the shading policy based on the type of the primitive and/or the style information of the primitive.

16. The method according to any one of claims 9 to 15, wherein the performing shading based on the shading policy comprises:
performing shading based on the shading policy, the style information of the primitive, or the texture of the primitive.

17. The method according to claim 15 or 16, wherein the method further comprises:
obtaining one or more of the type of the primitive, the style information of the primitive, and the texture of the primitive based on the index information of the primitive.

18. The method according to any one of claims 9 to 17, wherein the method is applied to one or more of a central processing unit CPU, a graphics processing unit GPU, and a neural-network processing unit NPU.

19. A rendering apparatus, wherein the apparatus comprises:
a data updating module, configured to obtain updated data of a primitive, wherein the updated data is data corresponding to a node whose data is updated in a node in a control tree and a node in a render tree; and
a definition module, configured to encode the updated data, to obtain first scene data, wherein the first scene data comprises data indicating a primitive type of the primitive and data indicating index information of the primitive, and the first scene data is used for rendering.

20. The apparatus according to claim 19, wherein the apparatus further comprises:
a data integration module, configured to obtain second data of the primitive, wherein the second data is data related to a drawing instruction of the primitive, wherein
the data updating module is specifically configured to:
perform node data updating on the control tree and the render tree based on the second data; and
obtain the updated data based on an updated control tree and an updated render tree.

21. The apparatus according to claim 20, wherein the apparatus further comprises:
an instruction interception module, configured to intercept the drawing instruction of the primitive, wherein
the data integration module is specifically configured to:
obtain first data of the primitive based on the drawing instruction of the primitive; and
obtain the second data of the primitive based on the first data of the primitive, wherein the second data is data obtained after the first data is converted into an identifiable format.

22. The apparatus according to any one of claims 19 to 21, wherein the definition module is specifically configured to:
encode the updated data based on a sequence relationship between the updated data.

23. The apparatus according to any one of claims 19 to 22, wherein the apparatus further comprises:
a resource updating module, configured to update the first scene data to a graphics processing unit GPU or a neural-network processing unit NPU, wherein the first scene data is used by the GPU or the NPU for rendering.

24. The apparatus according to claim 20 or 21, wherein the second data comprises one or more of the data indicating the type of the primitive, data indicating a location of the primitive, and data indicating a style of the primitive.

25. The method according to any one of claims 19 to 24, wherein the index information of the primitive comprises one or more of a transformation matrix index of the primitive, a style information index of the primitive, and a texture index of the primitive.

26. The method according to any one of claims 19 to 25, wherein the first scene data further comprises one or more of data indicating a transformation matrix of the primitive, data indicating style information of the primitive, and data indicating a texture of the primitive.

27. A rendering apparatus, wherein the apparatus comprises:
an obtaining module, configured to obtain first scene data, wherein the first scene data comprises data indicating a type of a primitive and data indicating index information of the primitive;
a decoding module, configured to decode the first scene data, to obtain third data, wherein the third data comprises updated data of the primitive, and the updated data is data corresponding to a node whose data is updated in a node in a control tree and a node in a render tree; and
a rendering module, configured to: determine a shading policy based on the third data, and perform shading based on the shading policy.

28. The apparatus according to claim 27, wherein the first scene data comprises data indicating that animation information of the primitive needs to be calculated, and the apparatus further comprises:
an animation calculation module, configured to calculate the animation information of the primitive based on the first scene data, wherein
the animation calculation module is further configured to encode the animation information of the primitive into the first scene data.

29. The apparatus according to any one of claims 27 or 28, wherein the index information of the primitive comprises one or more of a transformation matrix index of the primitive, a style information index of the primitive, and a texture index of the primitive.

30. The apparatus according to any one of claims 27 to 29, wherein the third data comprises the data indicating the type of the primitive and the data indicating the index information of the primitive.

31. The method according to any one of claims 27 to 30, wherein the third data further comprises data that is not updated, and the data that is not updated is data corresponding to a node whose data is not updated in the node in the control tree and the node in the render tree.

32. The apparatus according to any one of claims 27 to 31, wherein the rendering module is specifically configured to:
determine the shading policy based on the type of the primitive and/or the style information of the primitive.

33. The apparatus according to any one of claims 27 to 32, wherein the rendering module is further specifically configured to:
perform shading based on the shading policy, the style information of the primitive, or the texture of the primitive.

34. The apparatus according to claim 32 or 33, wherein the rendering module is further specifically configured to:
obtain one or more of the type of the primitive, the style information of the primitive, and the texture of the primitive based on the index information of the primitive.

35. An electronic device, comprising:
one or more processors;
one or more memories; and
one or more computer programs, wherein the one or more computer programs are stored in the one or more memories, the one or more computer programs comprise instructions, and when the instructions are executed by the one or more processors, the electronic device is enabled to perform the method according to any one of claims 1 to 8, or perform the method according to any one of claims 9 to 17.

36. A computer-readable storage medium, wherein the storage medium stores a program or instructions, and when the program or the instructions are run, the method according to any one of claims 1 to 8 is implemented, or the method according to any one of claims 9 to 17 is implemented.

37. A chip, comprising:
one or more processors; and
one or more memories, wherein the one or more processors are coupled to the one or more memories, and are configured to read and execute instructions in the one or more memories, to perform the method according to any one of claims 1 to 8, or perform the method according to any one of claims 9 to 17.

38. A computer program product, wherein
the computer program product comprises computer program code, and when the computer program code is run, the method according to any one of claims 1 to 8 is implemented, or the method according to any one of claims 9 to 17 is implemented.
